(19) **Europäisches Patentamt**
European Patent Office
Office européen des brevets

(11) **EP 1 472 106 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **03706258.5**

(22) Anmeldetag: **29.01.2003**

(51) Int Cl.:
***B60H 1/00*** *(2006.01)*    ***F01P 7/16*** *(2006.01)*

(86) Internationale Anmeldenummer:
**PCT/DE2003/000239**

(87) Internationale Veröffentlichungsnummer:
**WO 2003/064193 (07.08.2003 Gazette 2003/32)**

(54) **KLIMAANLAGE MIT HEIZFUNKTION UND VERFAHREN ZUM BETRIEB EINER KLIMAANLAGEN MIT HEIZFUNKTION**

AIR-CONDITIONING SYSTEM WITH HEATING FUNCTION AND METHOD FOR OPERATING AN AIR-CONDITIONING SYSTEM WITH HEATING FUNCTION

INSTALLATION DE CLIMATISATION AYANT UNE FONCTION CHAUFFAGE ET SON MODE DE FONCTIONNEMENT

(84) Benannte Vertragsstaaten:
**DE FR**

(30) Priorität: **30.01.2002 DE 10203772**

(43) Veröffentlichungstag der Anmeldung:
**03.11.2004 Patentblatt 2004/45**

(73) Patentinhaber: **ROBERT BOSCH GMBH**
**70442 Stuttgart (DE)**

(72) Erfinder:
- **HORSTMANN, Peter**
  **71067 Sindelfingen (DE)**
- **SATZGER, Peter**
  **70825 Korntal (DE)**
- **MALL, Gernot**
  **75177 Pforzheim (DE)**
- **KANTERS, Petra**
  **70197 Stuttgart (DE)**
- **GERUNDT, Oliver**
  **70567 Stuttgart (DE)**

(56) Entgegenhaltungen:
| | |
|---|---|
| **EP-A- 0 888 912** | **EP-A- 0 945 291** |
| **EP-A- 1 132 229** | **EP-A- 1 266 779** |
| **DE-A- 19 806 654** | **DE-A- 19 818 649** |
| **DE-U- 20 121 533** | **FR-A- 2 621 867** |
| **US-A- 5 497 941** | **US-A1- 2002 007 943** |

**Beschreibung**

Stand der Technik

Die Erfindung geht aus von einer Klimaanlage nach dem Oberbegriff des Anspruchs 1, beziehungsweise von einem Verfahren zum Betrieb einer solchen Klimaanlage.

Der Einsatz verbrauchsoptimierter Brennkraftmaschinen in Fahrzeugen wirkt sich auch auf deren Klimatisierung aus, indem in bestimmten Betriebsbereichen, beispielsweise bei niedrigen Außentemperaturen während der Startphase, nicht mehr genügend Wärme an die Kühlflüssigkeit abgegeben wird, um das Fahrzeug komfortabel zu beheizen. Dies gilt insbesondere für Dieselmotoren, die schon heute Zuheizer besitzen, um den Komfort bei niedrigen Temperaturen sicher zu stellen. Auch Brennkraftmaschinen mit Benzindirekteinspritzung werden in Zukunft einen Zuheizbedarf haben.

Aus diesem Grunde werden in Zukunft neben der eigentlichen Brennkraftmaschine weitere Wärmequellen im Fahrzeug in ein intelligentes Thermomanagement eingebunden werden.

Die meisten Fahrzeuge der Oberklasse, zunehmend auch die der Mittelklasse werden heutzutage standardmäßig mit Klimaanlagen ausgestattet. Die Komponenten dieser Klimaanlagen können bei niedrigen Temperaturen durch eine Umkehrung des Kältekreislaufes als Wärmepumpe benutzt werden. Eine solche Wärmepumpe zeichnet sich durch einen geringen Energieverbrauch und ein spontanes Ansprechverhalten bei hoher Heizleistung aus. Dies ist für Zuheizerkonzepte, insbesondere hinsichtlich der Sicherheit, beispielsweise bei der schnellen Enteisung von Fahrzeugscheiben, aber auch unter Komfortgesichtspunkten ein zukunftweisendes Konzept.

Zudem wird zukünftig in den Klimaanlagen von Fahrzeugen das herkömmliche Kältemittel R 134 a durch das natürliche Kältemittel Kohlendioxid ($CO_2$) ersetzt werden, welches höhere Heiztemperaturen ermöglicht als R 134 a. Im Gegensatz zu herkömmlichen Kaltdampfprozessen erfolgt die Wärmeabgabe bei einer $CO_2$-Klimaanlage nicht unter Kondensation des Kältefluids im Kondensator, sondern bei einem überkritischen Druck in einem Gaskühler. Wird eine solche Klimaanlage durch Kreislaufumkehr als Wärmepumpe benutzt, erfolgt die Wärmeaufnahme über den Gaskühler. Die Wärmeabgabe - also ein Heizeffekt - erfolgt über einen im Klimakasten der Klimaanlage unter dem Armaturenbrett des Fahrzeuges eingebauten Verdampfer.

Ein wesentlicher Nachteil einer solchen Wärmepumpe-Schaltung besteht allerdings darin, daß der Gaskühler bei niedrigen Außentemperaturen auf der Luftseite vereisen kann. Dies kann dazu führen, daß beispielsweise eine ausreichende Motorkühlung nicht mehr gewährleistet ist, da der in der Luftströmung in der Regel nachgeschaltete Kühler der Brennkraftmaschine nur noch unzureichend von Kühlluft durchströmt wird.

Zudem hat eine Wärmepumpenschaltung der Klimaanlage den Nachteil, daß die Klimaanlage nicht mehr zur Entfeuchtung der Luft genutzt werden kann. Durch die Wärmeabgabe über den Verdampfer wird zudem Wasser, das sich auf der Verdampferoberfläche befinden kann, verdampft, so daß ein zusätzlicher Scheibenbeschlag plötzlich auftreten kann (flash fogging). Des weiteren kann sich im Verdampfer bzw. auf dessen Oberfläche Wasser ansammeln, in dem es bei Erwärmung zu einer Anreicherung von Bakterien kommt, die zu Geruchsbelästigungen und gesundheitlichen Beeinträchtigungen beispielsweise durch Allergien führen können.

Um das Problem der Vereisung des Gaskühlers zu lösen, wurde in der DE 198 06 654 A 1 vorgeschlagen, das Motorkühlwasser als Wärmequelle zu nutzen. Die DE 198 06 654 A 1 offenbart eine Klimaanlage für Fahrzeuge, die als Kältemittel Kohlendioxid vewendet, welches in einem Kältemittelkreislauf in einem phasenweise flüssigen bzw. gasförmigen Zustand zirkuliert. Ein Verdichter fördert das Kältemittel in einem Kühlbetrieb über einen Gaskühler, einen inneren Wärmetauscher, eine Expansionseinrichtung, einen Verdampfer und über den inneren Wärmetauscher bei niedrigerem Druck zur Saugseite zurück. Dabei gibt das Kältemittel im Gaskühler einen Teil der Wärme ab, die durch die Kompression im Verdichter erzeugt wurde. Einen weiteren Teil überträgt das im inneren Wärmetauscher auf das zur Saugseite zurückströmende kühlere Kältemittel. In der Expansionseinrichtung wird das Kältemittel auf eine Temperatur expandiert, die unterhalb der Umgebungstemperatur liegt, so daß es im Verdampfer der Luft, die in das Klimagerät einströmt, Wärme entziehen kann und ggf. die Luft dadurch gleichzeitig trocknet. Die Luft wird dann durch einen nachgeschalteten Heizungswärmetauscher auf die gewünschte Temperatur gebracht. Dies erfordert jedoch ein zusätzliches Volumen im Klimakasten, das in vielen Fahrzeugen nicht zur Verfügung steht.

Durch Umschalten von Strömungsverteilern fördert der Verdichter das Kältemittel während eines Heizbetriebes zunächst über den Verdampfer, der nun in umgekehrter Richtung durchströmt wird. Hierbei gibt das Kältmittel einen Teil der durch die Kompression erzeugten Wärme an die in das Klimagerät einströmende Luft ab. Diese erwärmt somit den Fahrgastraum und enteist die Scheiben. Ist in bestimmten Betriebsphasen der Brennkraftmaschine der Heizungswärmetauscher kühler, als die ihn durchströmende Luft, wird ferner Wärme an den Kühlflüssigkeitskreislauf der Brennkraftmaschine abgegeben. Dies führt zu einem verzögerten Wärmeeintrag in den Fahrzeuginnenraum. Da der Luft keine Feuchtigkeit entzogen wird und vielmehr damit gerechnet werden muß, daß die Luft Restfeuchtigkeit aus dem Verdampfer aufnimmt, ist zu befürchten, daß bei dieser Art von Klimaanlage, sich später die Feuchtigkeit aus der gesättigten Luft an den kalten Fahzeugscheiben niederschlagen wird und durch die Sichtbeeinträchtigung zu einem Sicherheitsrisiko führt.

Nach dem Verdampfer wird das Kältemittel in der Klimaanlage der DE 198 06 654 A 1 in der Expansionseinheit auf eine tiefere Temperatur entspannt, so daß es auf seinem Weg zur Saugseite des Verdichters in einem Koppelwärmetauscher, der zwischen dem Flüssigkeitskreislauf und dem Kältemittelkreislauf angeordnet ist, Wärme aus dem Kühlflüssigkeitskreislauf aufnehmen kann. Durch eine solche Klimaanlage ist es möglich, auf Kosten der Brennkraftmaschine die Temperatur im Fahrgastraum bei kalten Witterungsbedingungen zu steigern.

Ein Problem bei Wärmepumpenschaltungen ist, daß die Wärmequellen zu wenig Wärme liefern, so daß die Heizleistung der Wärmepumpe unter Umständen sehr klein sein kann, obwohl der Kompressor der Klimaanlage mehr leisten könnte. Eine sogenannte Heißgasschaltung ermöglicht hier die Umwandlung der ganzen Kompressorleistung in Wärme, ohne daß eine andere Wärmequelle nötig ist. Eine Mischversion der beiden genannten Schaltungsarten für eine Klimaanlage ist in der EP 0945 291 A 1 offenbart, ohne allerdings das Problem der Entfeuchtung zu lösen. Die EP 0945 291 A 1 offenbart eine Vorrichtung und ein Verfahren zum Heizen und Kühlen eines Nutzraumes eines Kraftfahrzeuges, bei dem das Kältemittel im Heizbetrieb von einem Verdichter komprimiert und über ein Drei/Zwei-Wege-Ventil zu einem Verdampfer gelangt. Über den Verdampfer gibt das Kältemittel einen Teil der durch die Kompression erzeugten Wärme an die kältere Fahrzeuginnenraumluft ab. Vom Verdampfer strömt das Kältemittel zu einer Expansionseinrichtung, in der es soweit abgekühlt wird, daß es an einem nachfolgend angeordneten Gaskühler Wärme aus der Umgebungsluft aufnehmen kann. Weitere Wärme wird dem Kältemittel in der Vorrichtung der EP 0945 291 A 1 in einem nachgeschalteten Abgaswärmetauscher zugeführt, der mit heißen Abgasen der Brennkraftmaschine beaufschlagt wird.

Vom Abgaswärmetauscher gelangt das Kältemittel wieder zum Verdichter, wodurch der Kältemittelkreislauf der EP 0945 291 A 1 geschlossen ist. Wird das Kältemittel in der Expansionseinrichtung auf eine Temperatur expandiert, die unterhalb der Umgebungstemperatur liegt, kann die den Gaskühler durchströmende Luft auf eine Temperatur unterhalb der Sättigungstemperatur abgekühlt werden. In diesem Fall kondensiert Wasser aus der angesaugten Umgebungsluft. Liegt die Temperatur unterhalb der Sublimationslinie des Wassers geht dieses in den festen Zustand über, so daß der Gaskühler vereist. Da der Gaskühler in der Regel einem Kühler der Brennkraftmaschine in Strömungsrichtung der Luft vorgeschaltet ist, wird durch das Vereisen des Gaskühlers eine ordnungsgemäße Kühlung der Brennkraftmaschine gefährdet. Um ein zu starkes Vereisen zu vermeiden, wird daher bei kritischen Umgebungsbedingungen über ein Drei/Zwei-Wege-Ventil eine Beipaßleitung geöffnet, so daß der Gaskühler kurz geschlossen ist. Das Kältemittel strömt dann unter Umgehung des Gaskühlers direkt zum Abgaswärmetauscher und von dort zur Saugseite des Verdichters.

Die durch den Verdampfer strömende Fahrzeuginnenraumluft wird zwar erwärmt, jedoch wird ihr nicht - wie im Kühlbetrieb - die Feuchtigkeit entzogen. Vielmehr wird die warme Luft, die im Verdampfer zurückgebliebene Restfeuchtigkeit aufnehmen und wiederum an den kälteren Fahrzeugscheiben im Fahrzeuginnenraum als Beschlag abgeben. Eine ausreichende Entfeuchtung der Luft kann in einem solchen System nur durch zusätzliche Wärmetauscher im Klimagerät erreicht werden, wozu aber ein zusätzliches Bauvolumen erforderlich ist, das in vielen Fahrzeugen nicht vorhanden ist.

Sowohl eine reine Heißgasschaltung als auch die Schaltung der EP 0945 291 A 1 benötigen ein Expansionsventil für ein heißes Gas ("Heißgasventil"), welches sehr teuer ist, da es für hohe Volumenströme, hohe Drücke und hohe Temperaturen ausgelegt sein muß.

Aus der DE 198 18 649 A 1 ist eine Fahrzeugklimaanlage und ein Verfahren zur Temperierung eines Kühlmittels eines Antriebsaggregates bekannt, bei der/dem im Kältemittelkreislauf ein Wärmetauscher angeordnet ist, der einerseits vom Kältemittel der Klimaanlage und andererseits von einem Kühlmittel eines Antriebsaggregates beaufschlagbar ist. Der Wärmetauscher der DE 198 18 649 A 1 ist in dem Kältemittelkreislauf zwischen dem Kompressor und dem Kondensator angeordnet und weist eine Wärmetauscher-Beipaßleitung auf, die es mit Hilfe eines Wärmetauscher-Beipaßventils ermöglicht, den Wärmetauscher auf der Kältemittelseite zu überbrücken. Während der Aufheizphase des Kühlmittels des Antriebsaggregates wird der Kondensator der Klimaanlage durch eine Beipaßleitung überbrückt, so daß die im Kompressor erzeugte Wärme entweder ausschließlich über den Wärmeübertrager auf das Kühlmittel übergehen kann oder auch über einen Verdampfer der Klimaanlage auf die durch den Verdampfer strömende Luft übertragen werden kann. Die Wärmetauscher-Beipaßleitung wird dazu geschlossen und die Beipaßleitung über dem Kondensator geöffnet, so daß das Kältemittel den Kompressor, den Wärmetauscher, das Expansionsorgan und den Verdampfer im Kreislauf der Klimaanlage der DE 198 18 649 A 1 durchströmt. Da der Kondensator überbrückt ist, wird das Kältemittel durch bei der Kompression in dem Kompressor erzeugten Wärme in den gasförmigen Zustand übergehen und in dem gesamten Kreislauf gasförmig bleiben. Die im Kompressor aufgenommene Wärme kann so im Wärmetauscher an das noch kalte Kühlmittel abgegeben werden. Danach wird das Kältemittel im Expansionsorgan expandiert und nach Durchströmen des Verdampfers im Kompressor wieder komprimiert und dadurch erwärmt.

Aus der EP 0 888 912 A2 ist ein Klimatisierungssystem für ein Kraftfahrzeug, angetrieben durch eine Brennkraftmaschine, bekannt, bei dem der Fluss des Motorkühlwassers, der in einen Sub-Verdampfer gerichtet ist, in Übereinstimmung mit einer Belastung des Verbrennungsmotors eines zugehörigen Kraftfahrzeugs gesteuert wird.

Um dieses Ziel zu erreichen wird in der EP 0 888 912 A2 vorgeschlagen, ein Klimatisierungssystem mit einem Kühlwasserkreislauf zu versehen durch den das Motorkühlwasser des Motors zu einem Heizerkern hindurchgeführt wird, um Luft, die durch den Heizerkern hindurchgeht, zu erwärmen.

Aus der EP 1 266 779 A2 ist ein Fahrzeug-Kühlkreislauf für die Kühlung einer temperaturerhöhenden Einrichtung mittels eines Kühlmittels bekannt, wobei der Kühlkreislauf über einen Wärmetauscher mit einer Wärmepumpe gekoppelt ist. Der Fahrzeug-Kühlkreislauf der EP 1 266 799 A2 weist dazu einen oder mehrere parallel und/oder in Reihe geschaltete Kühler, eine Kühlmittelpumpe und einen zwischen der temperaturerhöhenden Einrichtung und dem Kühler angeordneten Wärmetauscher auf, der mit einem Wärmepumpenkreis gekoppelt ist. Der Wärmepumpenkreis zeichnet sich dadurch aus, dass ein Wärmetauscher - in Strömungsrichtung des Kühlmittels gesehen - stromabwärts zum Kühler und stromaufwärts zur temperaturerhöhenden Einrichtung liegt.

Aufgabe der vorliegenden Erfindung ist es, einen möglichst einfachen Kältemittelkreislauf sowie ein Verfahren zur Regelung eines solchen Kältemittelkreislaufes zu finden, so daß sowohl eine Entfeuchtung des Innenraumes als auch eine Zusatzheizung hoher Leistung möglich wird. Insbesondere soll eine solche Klimaanlage bereitgestellt werden, die ohne zusätzlichen Bauraum im Klimakasten auskommt.

Vorteile der Erfindung:

Nach der Erfindung ist ein Koppelwärmetauscher in einem Kältemittelkreislauf einer Klimaanlage für ein Fahrzeug integriert, der zudem vom Kühlmittel eines Kühlkreislaufes einer Wärmequelle des Fahrzeuges durchströmt wird. Durch Umkehrung des Kältemittelkreislauf kann die Klimaanlage als Wärmepumpe genutzt werde.

Die Heizfunktion der Klimaanlage wird realisiert durch eine Wärmepumpenschaltung, die vorzugsweise im Umluftbetrieb die Entfeuchtungswärme am Verdampfer als Wärmequelle nutzt und die Nutzwärme über den Koppelwärmetauscher des Kältemittelkreislaufes an das Kühlmittel abgibt, so daß über einen Heizungswärmetauscher der Innenraum des Fahrzeuges geheizt werden kann. Auf diese Weise lässt sich die Kälteleistung beispielsweise so an den Entfeuchtungsbedarf anpassen, daß eine optimale Aufheizung bei gleichzeitiger Entfeuchtung der Luft realisierbar ist. Diese Regelung erfolgt erfindungsgemäß indirekt mit Hilfe des Koppelwärmetauscher über die Steuerung beziehungsweise Regelung der Wärmemengenabgabe in den Kühlmittelkreislauf des Fahrzeuges. Weiterhin ist vorgesehen, daß im Kühlmittelkreislauf Mittel angeordnet sind, die es gestatten, die Wärmemengenabgabe durch den Koppel-Wärmetauscher zu steuern beziehungsweise zu regeln.

Diese Anordnung beziehungsweise das zugrundeliegende Verfahren zum Betrieb einer solchen Klimanalage mit Heizfunktion ermöglicht die Einkopplung einer hohen Heizleistung in den Innenraum des Fahrzeuges bei gleichzeitiger Entfeuchtung der Luft. Die Wärmeeinkopplung in den Verdampfer der Klimaanlage kann so gesteuert werden, daß eine maximale Leistungseinkopplung in den Kältemittelkreislauf und damit in den Innenraum des Fahrzeuges durch den Kompressor möglich ist.

Damit ist ein Heizbetrieb im vollen Umluftbetrieb möglich, womit eine erhebliche Einsparung an Heizenergiebedarf einhergeht. Es wird zudem kein zusätzlicher Bauraum im Klimakasten des Fahrzeugs benötigt.

Durch eine entsprechende Verschaltung auf der Kühlmittelseite kann die übertragene Wärme definiert beispielsweise dem Kühlsystem eines Motors zugeführt werden, wodurch eine schnellere Motoraufheizung möglich ist, was nicht zuletzt in Hinsicht auf eine Emissionsminderung von Verbrennungsmotoren von Vorteil ist.

Der Koppelwärmetauscher wird auch im Kühlbetrieb der Klimaanlage durchströmt. Die Wärmeauskopplung in das Kühlwasser des Fahrzeuges wird im Kühlbetrieb zur Verbesserung der Wärmeabfuhr genutzt. Damit geht sowohl eine Verbesserung der Kälteleistung, als auch des Wirkungsgrades einher, so daß beispielsweise ein Verbrennungsmotor des Fahrzeuges schneller aufgeheizt werden kann.

Erfindungsgemäß kann somit auf die Verwendung eines Heißgasventils im Anschluß an den Verdichter verzichtet werden, so daß eine Regelung der Kälteleistung im Verdampfer bei gleichzeitig hohem Kompressionsdruck und damit hoher Heizleistung im Koppelwärmetauscher möglich ist.

Die Klimaanlage ermöglicht ein einfaches Verfahren zum Betrieb einer Klimaanlage, bei dem die Verdampferleistung des Verdampfers der Klimaanlage durch die Wärmeabgabe über den Koppel-Wärmetauscher in den Kühlmittelkreislauf der Wärmequelle gesteuert und/oder geregelt werden kann.

Um einen möglichst großen Wärmemengeneintrag von der Klimaanlage über den Koppelwärmetauscher in den Kühlmittelkreislauf zu gewährleisten, ist der Koppelwärmetauscher erfindungsgemäß in Strömungsrichtung des Kältemittels zwischen dem Verdichter und dem Expansionsventil des Kältemittelkreislaufs angeordnet.

Durch die in den weiteren Ansprüchen aufgeführten Maßnahmen sind vorteilhafte Verbesserungen und Weiterbildungen der im Anspruch 1 angegebenen Klimaanlage möglich. Ebenso ergeben sich daraus vorteilhafte Verbesserungen und Weiterbildungen für ein Verfahren zum Betrieb einer solchen Klimaanlage.

Die Steuer- und Regelung der Wärmemengenabgabe durch den Koppelwärmetauscher kann in einem vorteilhaften Ausführungsbeispiel der erfindungsgemäßen Klimaanlage durch die Reglung des Kühlmittelmassenstroms durch den Koppelwärmetauscher ermöglicht werden. Auf diese Art lässt sich eine definierte Steuerung der vom Koppelwärmetauscher abgegebenen Leistung und damit eine optimale Anpassung der Kälteleistung der Klimaanlage realisieren. Eine Erhöhung der vom Koppelwärmeaustauscher abgegebenen Leistung durch Steuerung des Kühlmittelmassenstroms führt zu einer Erniedrigung des Verdampfungsdrucks im Kältemittelkreislauf und umgekehrt.

In einem vorteilhaften Ausführungsbeispiel der erfindungsgemäßen Klimaanlage wird der Kühlmittelmassenstrom durch den Koppelwärmetauscher durch eine Bypaßleitung über dem Koppelwärmetauscher auf der Kühlmittelseite der kombinierten Klima-, Kühl- und Heizungsanlage geregelt. Dazu kann beispielsweise in definierter Weise ein Bypaßventil der Kühlmittelseite so angesteuert werden, daß nur ein gewünschter Kühlmittelmassenstrom durch den Koppelwärmetauscher fließt. Der Koppelwärmetauscher kann in diesem Ausführungsbeispiel der erfindungsgemäßen Klimaanlage auf der Kühlmittelseite beispielsweise nach dem Heizungswärmetauscher im Kühlmittelkreislauf eines Verbrennungsmotors für ein Kraftfahrzeug integriert sein.

In einem vorteilhaften Ausführungsbeispiel der erfindungsgemäßen Klimaanlage kann der Kühlmittelmassenstrom durch den Koppelwärmetauscher durch die Ansteuerung einer zusätzlichen, beispielsweise in Reihe zum Koppelwärmetauscher geschalteten elektrischen Zusatzwasserpumpe bzw. optional auch durch die elektrische Hauptwasserpumpe des Kühlmittelkreislaufes beispielsweise eines Verbrennungsmotors geregelt werden.

In einer weiteren vorteilhaften Ausführungsform der erfindungsgemäßen Klimaanlage kann der Koppelwärmetauscher auf der Kühlmittelseite beispielsweise parallel zum Verbrennungsmotor geschaltet sein, so daß der Kühlmittelvolumenstrom durch den Koppelwärmetauscher durch die Ansteuerung eines zusätzlichen Mischventils im Kühlmittelkreislauf des Verbrennungsmotors geregelt werden kann.

In anderen Ausführungsbeispielen kann die Wärmemengenabgabe auch durch die Regelung der Temperatur des Kühlmittels realisiert sein.

Insbesondere lässt sich in vorteilhafter Weise der Koppelwärmetauscher in Strömungsrichtung des Kältemittels vor dem Kondensator bzw. Gaskühler anordnen und ein zusätzliches Heiz-Kühlbetrieb-Umschaltventil vorzugsweise vor dem Kondensator bzw. Gaskühler vorsehen.

In einer anderen Ausführungsform der erfindungsgemäßen Klimaanlage ist vorgesehen, den Koppelwärmetauscher in Strömungsrichtung des Kältemittels parallel zum Kondensator bzw. Gaskühler anzuordnen.

In vorteilhafter Weise kann in weiteren Ausführungsformen der erfindungsgemäßen Klimaanlage vorgesehen sein, ein Heiz-Kühlbetrieb-Ventil derart im Kältemittelkreislauf anzuordnen, dass entweder der Kondensator bzw. Gaskühler im Kühlbetrieb oder der Koppel-Wärmetauscher im Heizbetrieb der Klimaanlage durchströmt wird. Das Heiz-Kühlbetrieb-Umschaltventil lässt sich dabei beispielsweise vor dem Kondensator bzw.

Gaskühler anordnen. Auf diese Weise ist es möglich, eine einfache Umschaltung zwischen dem Heiz- bzw. Kühlbetrieb zu realisieren. Insbesondere ist eine solche einfache Umschaltung in vorteilhafter Weise durch die Verwendung eines 3-WegeVentils möglich.

In einer Weiterbildung der erfindungsgemäßen Klimaanlage ist die optionale Zuschaltung eines inneren Wärmetauschers, insbesondere im Heizbetrieb, vorgesehen. Durch diesen inneren Wärmetauscher kann in vorteilhafter Weise auch bei hohen Kühlwassertemperaturen eine ausreichende Entfeuchtung gewährleistet werden. Der innere Wärmetauscher lässt sich vorteilhaft, in Strömungsrichtung des Kältemittels, hinter dem Kondensator bzw. Gaskühler anordnen. Dabei lässt sich die erfindungsgemäße Klimaanlage derart ausbilden, dass insbesondere im Kältemittelkreislauf Mittel vorgesehen sind, die es ermöglichen, unter Umgehung des Kondensators bzw. Gaskühlers einen Kältemittelvolumenstrom durch den inneren Wärmetauscher zu leiten.

Diese Mittel zur Steuerung eines Volumenstroms durch den inneren Wärmetauscher können in vorteilhafter Weise ein Ventil und/oder eine Drossel aufweisen. Das Ventil kann dabei beispielsweise als ein 2-Wege-Ventil, die Drossel beispielsweise in Form einer Kapillare ausgestaltet sein.

In einer vorteilhaften Ausführungsform der erfindungsgemäßen Klimaanlage ist, in Strömungsrichtung des Kältemittels, hinter dem Kondensator bzw. Gaskühler ein Ventil, insbesondere ein Rückschlagventil, angeordnet.

In besonders vorteilhafter Weise kann das zumindest eine Expansionsventil des Kältemittelkreislaufs als ein regelbares Expansionsventil ausgebildet sein. Der erfindungsgemäße Kältemittelkreislauf ist dabei derart ausgestaltet, dass das Expansionsventil sowohl im Heiz- als auch im Kühlbetrieb nur in einer Richtung durchströmt wird.

In einer vorteilhaften Weiterbildung der erfindungsgemäßen Klimaanlage ist vorgesehen, dass mindestens zwei Komponenten aus einer Gruppe von Komponenten, die zumindestens den Koppel-Wärmetauscher, das Bypassventil zur Umgehung des Kondensators bzw. Gaskühlers, den inneren Wärmetauscher, das Expansionsventil, das Regelventil, die Drossel und das Rückschlagventil umfasst, in einer baulichen Einheit angeordnet sind. Die Kombination zweier bzw. mehrerer der zuvor aufgeführten Elemente der erfindungsgemäßen Klimaanlage in einem kompakten Modul ermöglicht eine erhebliche Einsparung von Kältemittelleitungen als auch von elektrischen Leitungen. Auf diese Art ist es in vorteilhafter Weise möglich, die Wärme- bzw. Kälteverluste durch die Kältemittelleitungen zu reduzieren. Solch ein kompaktes Modul kann beispielsweise auch bereits die Ansteuerelektronik für eine oder mehrerer seiner Komponenten enthalten. Dies ermöglicht ein hochintegriertes System und spart wiederum Bauraum.

In vorteilhafter Weise lässt sich zumindestens ein Wärmetauscher, in bevorzugter Weise jedoch beide Wärmetauscher, als Mikrostruktur-Wärmetauscher ausbilden. Bei Fertigung der Wärmetauscher in Mikrostruktur ergeben sich enorme Platz- und Gewichtsersparnisse, da beispielsweise die Anschlüsse dieser Komponenten zusammengefasst werden können.

In einer weiteren Ausgestaltung der erfindungsgemäßen Klimaanlage arbeitet zumindest ein Wärmetauscher, vorteilhafter Weise jedoch mehrere Wärmetauscher, nach dem Gegenstromprinzip. Insbesondere lässt sich der Koppelwärmetauscher im Kühlmittelkreislauf des Fahrzeuges in Strömungsrichtung nach einem Heizungswärmetauscher anordnen.

In einer vorteilhaften Weiterbildung der erfindungsgemäßen Klimaanlage ist der Koppel-Wärmetauscher im Kühlmittelkreislauf des Fahrzeuges auf der Saugseite einer Kühlmittelpumpe angeordnet. In vorteilhafter Weise handelt es sich bei dieser Kühlmittelpumpe um eine regelbare elektrische Kühlmittelpumpe. Andere, als elektrisch regelbare Kühlmittelpumpen, sind jedoch ebenfalls möglich.

Der Koppelwärmetauscher kann in vorteilhafter Weise parallel zur Wärmequelle, insbesondere parallel zu einem Verbrennungsmotor im Kühlmittelkreislauf des Fahrzeugs angeordnet sein. Durch Ventile und eine entsprechende Verschaltung der Kühlmittelleitungen lässt sich erreichen, dass die Nutzwärme über den Koppelwärmetauscher (Kühlwasser-Wärmetauscher) ans Kühlmittel abgegeben wird, effektiv über einen Heizungswärmetauscher an die Innenluft des Fahrzeuges weitergeleitet werden kann. Eine solche Anordnung ermöglicht die schnelle Einkopplung einer hohen Heizleistung in den Innenraum des Fahrzeuges bei gleichzeitiger Entfeuchtung der Luft. Alternativerweise lässt sich durch eine entsprechende Verschaltung auf der Kühlwasserseite der erfindungsgemäßen Klimaanlage die Wärme ganz oder teilweise auch in den Verbrennungsmotor einbringen, wodurch eine schnellere Motoraufheizung ermöglicht wird, die beispielsweise zu einer Verminderung der Emission des Verbrennungsmotors führt.

In einer Ausführungsform der erfindungsgemäßen Klimaanlage ist vorgesehen, ein Kältemittel zu verwenden, bei dem die Wärmeabgabe bei überkritischem Druck erfolgt. Insbesondere ist die erfindungsgemäße Klimaanlage in vorteilhafter Weise für das Kältemittel Kohlendioxid ausgelegt. Jedoch ist die erfindungsgemäße Klimaanlage auch mit anderen Kältemitteln realisierbar.

Die erfindungsgemäße Klimaanlage ermöglicht ein einfaches Verfahren zum Betrieb einer Klimaanlage, bei dem die Verdampferleistung eines Verdampfers der Klimaanlage durch die Wärmeabgabe über einen Koppel-Wärmetauscher in den Kühlmittelkreislauf einer Wärmequelle gesteuert und/oder geregelt werden kann. Insbesondere lässt sich die Wärmeabgabe in den Kühlmittelkreislauf durch einen Kühlmittelmassenstrom durch den Koppel-Wärmetauscher steuern bzw. regeln. Zur Regelung des Kühlmittel-Massenstroms durch den Koppel-Wärmetauscher wird in vorteilhafter Weise eine Stellgröße genutzt, die eine Abhängigkeit von einem Temperatursignal der Lufttemperatur nach dem Verdampfer aufweist. So ist es möglich, der Regelung einen Sollwert für die Lufttemperatur nach dem Verdampfer zuzuweisen, der dazu führt, dass eine Entfeuchtung der dem Innenraum zugeführten Luft stattfindet. Insbesondere lässt sich der Sollwert für die Lufttemperatur nach dem Verdampfer derart bestimmen, dass im Umluftbetrieb der Klimaanlage kein Scheibenbeschlag im Fahrzeug auftritt.

In einer weiteren Ausführungsform des erfindungsgemäßen Verfahrens zum Betrieb einer Klimaanlage ist vorgesehen, zur Regelung des Kühlmittelmassenstroms durch den Koppel-Wärmetauscher eine Stellgröße zu nutzen, in die der Druck des Kältemittels der Klimaanlage, gemessen an einer Mess-Stelle zwischen dem Austritt aus einem Expansionsorgan und dem Eintritt in einen Verdichter der Klimaanlage, eingeht.

Ebenso lässt sich in dem erfindungsgemäßen Verfahren zum Betrieb einer Klimaanlage die Regelung des Kühlmittelmassenstroms durch den Koppel-Wärmetauscher in vorteilhafter Weise derart gestalten, dass eine Stellgröße genutzt wird, in die die Temperatur des Kältemittels vor- und/oder nach dem Verdampfer eingeht.

Alternativer Weise bzw. zusätzlich lässt sich die Regelung des Kühlmittelmassenstromes durch den Koppel-Wärmetauscher durch eine Stellgröße regeln, in die die Temperatur des Kältemittels nach dem Koppel-Wärmeübertrager eingeht. In einer vorteilhaften Weiterbildung des erfindungsgemäßen Verfahrens zum Betrieb einer Klimaanlage lässt sich die Verdampferleistung des Verdampfers der Klimaanlage und damit auch die Lufttemperatur nach dem Verdampfer durch eine zusätzliche Ansteuerung des Kompressors regeln. Insbesondere lässt sich eine derartige Regelung nutzen, die es ermöglicht, die Verdampfungstemperatur im Verdampfer so niedrig einzustellen, dass sich auf dem Verdampfer Frost bildet. Damit ist es mit dem erfindungsgemäßen Verfahren zum Betrieb einer Klimaanlage möglich, die Verdampferleistung des Verdampfers und damit auch die Lufttemperatur nach dem Verdampfer durch zusätzliche Mittel zu steuern. Diese zusätzlichen Mittel ermöglichen es in vorteilhafter Weise, ein An- oder Abschalten des inneren Wärmetauschers zu realisieren.

Auch die Verwendung mehrerer der zuvor aufgezeigten Stellgrößen ist selbstverständlich möglich und vorteilhaft.

Mit der vorliegenden Erfindung ist es daher möglich, eine Klimaanlage, und insbesondere einen Kältemittelkreislauf für eine Klimaanlage zu realisieren, der sowohl eine Entfeuchtung des Innenraums, als auch eine Zusatzheizung hoher Leistung in einer sehr kompakten Bauweise ermöglicht. Insbesondere ist es mit der vorliegenden Erfindung möglich, eine Klimaanlage und ein Verfahren zur Regelung einer solchen Klimaanlage zu realisieren, die ohne zusätzlichen Bauraum im Klimakasten eines Fahrzeuges auskommt.

Weitere Vorteile und Ausführungsformen der Erfindung finden sich in der nachfolgenden Beschreibung sowie den Zeichnungen.

Zeichnung

In der Zeichnung sind mehrere Ausführungsbeispiele einer erfindungsgemäßen Klimaanlage bzw. mehrere Ausführungsbeispiele für Regelverfahren einer solchen Klimaanlage dargestellt, die in der nachfolgenden Beschreibung näher erläutert werden. Die Figuren der Zeichnungen, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen:

Figur 1 — eine CO$_2$-Klimaanlage nach dem Stand der Technik, in schematischer Darstellung

Figur 2 — einen Heizgaskreislauf in schematischer Darstellung, ebenfalls nach dem Stand der Technik,

Figur 3 — ein erstes Ausführungsbeispiel einer erfindungsgemäßen Klimaanlage in schematischer Darstellung,

Figur 4 — ein zweites Ausführungsbeispiel einer erfindungsgemäßen Klimaanlage mit zuschaltbarem innerem Wärmetauscher, in schematischer Darstellung

Figur 5 — ein drittes Ausführungsbeispiel einer erfindungsgemäßen Klimaanlage in schematischer Darstellung,

Figur 6 — eine schematische Darstellung der Heizfunktion in einem P(Druck)-H(Enthalpie)-Diagramm,

Figur 7 — ein erstes Ausführungsbeispiel für eine Einbindung des Koppelwärmetauschers der erfindungsgemäßen Klimaanlage in den Kühlwasser/Heizkreislauf eines Kraftfahrzeuges, in schematischer Darstellung,

Figur 8 — ein zweites Ausführungsbeispiel für eine mögliche Einbindung des Koppelwärmetauschers der Klimaanlage in den Kühlwasser-Heizkreislauf eines Kraftfahrzeuges, in schematischer Darstellung,

Figur 9 — ein weiteres Ausführungsbeispiel der Einbindung des Koppelwärmetauschers der erfindungsgemäßen Klimaanlage in den Kühlwasser-Heizkreislauf eines Kraftfahrzeuges, in schematischer Darstellung,

Figur 10 — eine schematische Darstellung einer Regelstrategie der Kälteleistung der erfindungsgemäßen Klimaanlage im Heizbetrieb, in schematischer Darstellung,

Figur 11 — eine zweite Variante für eine Regelstrategie der Kälteleistung der erfindungsgemäßen Klimaanlage im Heizbetrieb,

Figur 12 — eine dritte Variante einer Regelstrategie für die Kälteleistung der erfindungsgemäßen Klimaanlage im Heizbetrieb,

Figur 13 — eine vierte Variante einer Regelstrategie für die Kälteleistung der erfindungsgemäßen Klimaanlage im Heizbetrieb,

Figuren 14-19 — mögliche Varianten zur relativen Anordnung des Koppelwärmeübertragers und des Gaskühlers in der erfindungsgemäßen Klimaanlage.

Beschreibung der Ausführungsbeispiele

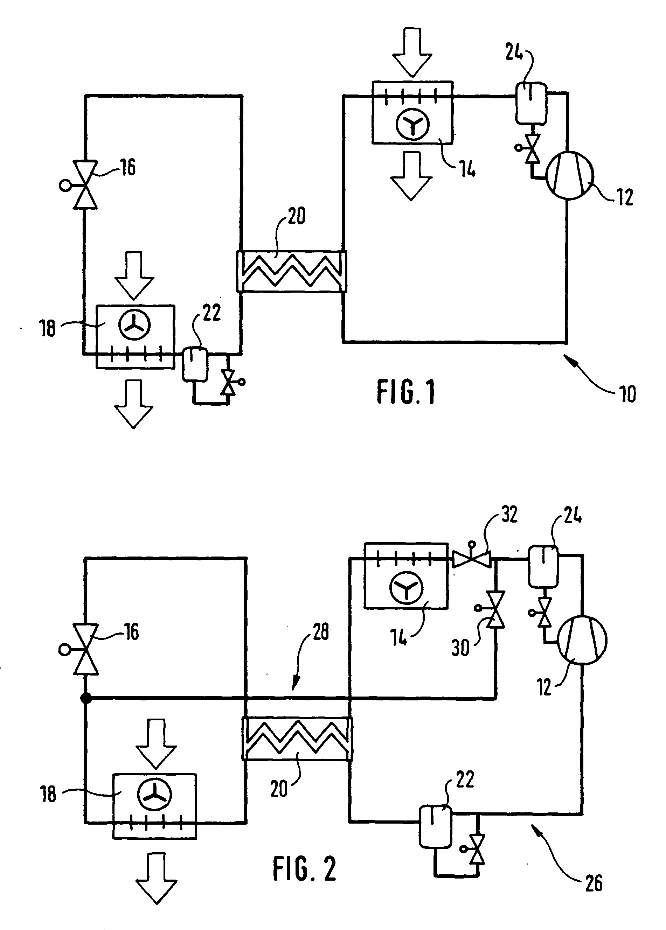

Figur 1 zeigt in einer schematischen Darstellung die Standardanordnung einer CO$_2$-Klimaanlage 10, wie sie im Stand der Technik allgemein bekannt ist. Ein Kompressor 12, ein Gaskühler bzw. Kondensator 14, ein Expansionsventil 16 und ein Verdampfer 18 sind in einem geschlossenen Kreislauf, in welchem ein Kältemittel umlaufen kann, miteinander verbunden. Darüber hinaus weist die CO$_2$-Klimaanlage gemäß Figur 1 einen inneren Wärmetauscher 20 auf, der zwischen dem Gaskühler 14 und dem Expansionsventil 16 auf der einen Seite und zwischen dem Verdampfer 18 und dem Kompressor 12 auf der anderen Seite angeordnet ist. Des weiteren besitzt der CO$_2$-Kreislauf gemäß Figur 1 einen Sammler 22, in dem abgeschiedene Flüssigkeit gesammelt wird, sowie einen Ölabscheider 24 zur Abtrennung eventuell durch den Kompressor in den Kreislauf gelangender Ölbestandteile.

Im Gegensatz zu herkömmlichen Kaltdampfprozessen erfolgt die Wärmeabgabe bei einer $CO_2$-Klimaanlage, wie sie in Figur 1 dargestellt ist, nicht unter Kondensation des Kältefluids in einem Kondensator, sondern bei einem überkritischen Druck in einem Gaskühler 14. Im Expansionsorgan 16 erfolgt eine Entspannung des Kältemittels und damit eine Abnahme des Drucks. Das durch das Expansionsorgan 16 entspannte Kältemittel tritt in den Verdampfer 18 ein, in dem es eine Wärmeaufnahme von einem äußeren Medium erfährt. Das Kältemittel gelangt über den inneren Wärmetauscher 20, in dem eine Wärmeübertragung erfolgt, durch Ansaugung in den Kompressor 12, in dem der Druck des Kältemittels durch die mechanische Arbeit des Kompressors wiederum erhöht wird.

Wird eine solche Klimaanlage durch Kreislaufumkehr als Wärmepumpe benutzt, erfolgt die Wärmeaufnahme über den Gaskühler 14. Die Wärmeabgabe, d.h. der Heizeffekt, erfolgt dann über einen im Klimakasten der Klimaanlage beispielsweise eines Fahrzeuges eingebauten Verdampfer 18. Nachteilhaft bei einer derartigen Ausgestaltung eines Klimaanlagenkreislaufs ist, dass der innere Wärmetauscher 20 sowohl im Kühlmodus, als auch im Wärmepumpenmodus durchlaufen wird.

Figur 2 zeigt eine alternative Ausführungsform einer Klimaanlage in Form eines Heizgaskreislaufs. Zwischen dem Expansionsventil 16 und dem Gaskühler 14 ist eine Verbindungsleitung 28 vorgesehen, die über ein Ventil 30 geöffnet bzw. geschlossen werden kann. Das Ventil 30 kann in vorteilhafter Weise zusammen mit einem Ventil 32, welches zwischen der Verbindungsleitung 28 und dem Gaskühler 14 angeordnet ist, als ein Drei-Wege-Mischventil ausgebildet werden.

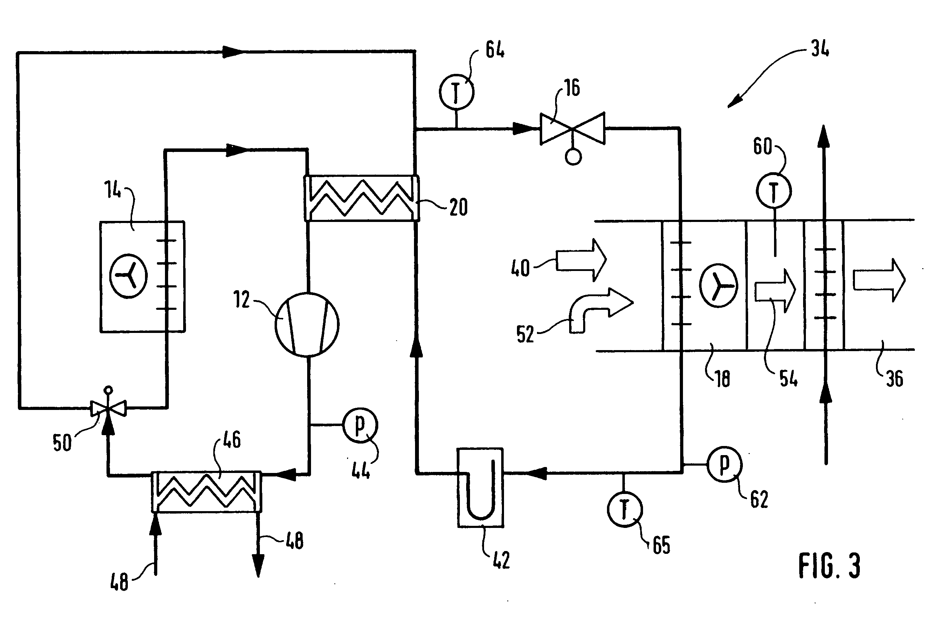

Figur 3 zeigt ein erstes Ausführungsbeispiel einer erfindungsgemäßen Klimaanlage mit Kühl- und Heizbetrieb sowie vorgesehener Wärmeeinkopplung in den Kühlwasserkreislauf eines Kraftfahrzeugs. Die nachfolgende Darstellung bezieht sich auf ein Kältemittel mit transkritischer Prozessführung, insbesondere auf das Kältemittel $CO_2$. Jedoch ist die Erfindung auch mit anderen Kältemitteln realisierbar. In diesem Fall würde an Stelle eines Gaskühlers 14 beispielsweise ein klassischer Kondensator, wie er aus dem Stand der Technik vielfach bekannt ist, verwendet. In diesem Sinne wird in dieser Anmeldung der Begriff "Kondensator bzw. Gaskühler" 14 genutzt.

Die Funktionsweise der erfindungsgemäßen Klimaanlage 34 gemäß Figur 3 wird im Folgenden beschrieben. Der sich im Klimakasten 36 des Kraftfahrzeuges befindliche Verdampfer 18 nimmt Wärme von der in dem Innenraum des Kraftfahrzeuges strömenden Luft 40 auf und verdampft dabei das Kältemittel. Dieses gelangt, nachdem im Sammler 42 Flüssigkeit abgeschieden wurde, über einen inneren Wärmetauscher 20 in den Kompressor 12. Im Kompressor 12 wird das Kältemittel auf den Hochdruck $p_{HP}$ verdichtet. Der Verdichtungsdruck $p_{HP}$ wird über entsprechende Messinstrumente 44 diagnostiziert. Das heiße Gas gibt seine innere Wärme im Koppelwärmetauscher 46 an das Kühlwasser 48, eines in Figur 3 nicht weiter dargestellten Kühlwasser-Heizkreislaufs, beispielsweise eines Kraftfahrzeuges, ab. Nach Durchlaufen des Koppelwärmetauschers 46 gelangt das nun abgekühlte Gas über ein Umschaltventil 50, ohne durch den inneren Wärmetauscher 20 zu gehen, direkt in das Expansionsorgan 16, das in Figur 3 in Form eines Ventils dargestellt ist. Mittels des Expansionsventils 16 wird das Kältemittel entspannt und gelangt so anschließend wieder in den Verdampfer 18. Erfindungsgemäß wird also der innere Wärmetauscher 20 auf einer Seite des Strömungskreises der Klimaanlage nicht durchströmt. Dadurch kühlt sich in vorteilhafter Weise das Fluid zwischen dem Koppelwärmetauscher 46 und dem Expansionsventil 16 nicht weiter ab, im Gegensatz zu Klimaanlagen des Standes der Technik, wie sie beispielhaft in Figur 1 dargestellt sind.

Auf diese Weise wird eine Regelung der Kälteleistung im Verdampfer 18 bei gleichzeitig hohem Kompressionsdruck $p_{HP}$ und damit hoher Heizleistung im Koppelwärmetauscher 46 möglich.

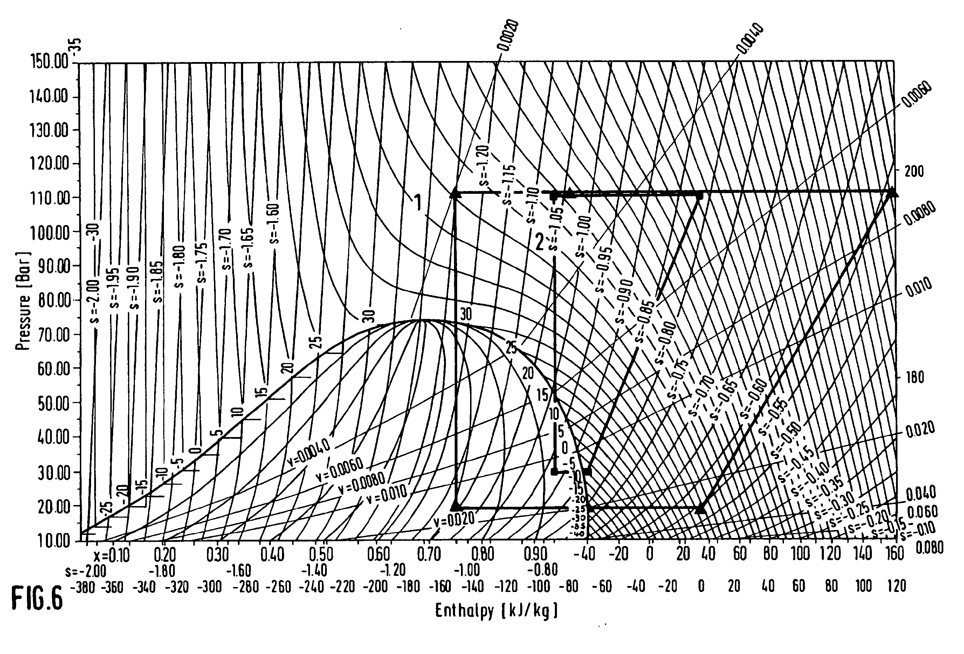

Figur 6 dient zur Erläuterung des Sachverhalts anhand eines Druck-Enthalpie-Diagramms des Fluids $CO_2$ als mögliches Kältemittel für den erfindungsgemäßen Klimaanlagen-Kreislauf. Es hat sich gezeigt, dass bei einer Nutzung des inneren Wärmetauschers 20 im Heizbetrieb der Klimaanlage das Kältemittel $CO_2$ vor dem Expansionsventil 16 bei typischen Temperaturen im Heizfall bereits so stark abgekühlt würde, dass damit eine große Verdampfungsenthalpie im Verdampfer 18 zur Verfügung stünde (siehe Kreislauf 1 der Figur 6). Damit würde eine zu hohe Kälteleistung umgesetzt, die zu einer Verringerung der Verdampfungstemperatur führen würde. Dies wiederum würde einem geringeren Verdampfungsdruck entsprechen und damit zu einer reduzierten Leistung des Kompressors 12 führen. Die reduzierte Kompressorleistung wiederum führt zu einer reduzierten effektiven Heizleistung des Systems. Mit der in Figur 3 dargestellten erfindungsgemäßen Klimaanlage wird dieser Nachteil umgangen, indem der innere Wärmetauscher 20 im Heizbetrieb, und nur dort, nicht durchströmt wird. Figur 6 zeigt den Zustandsverlauf dieser erfindungsgemäßen Heizschaltung als Kreislauf 2.

Für eine optimale Anpassung der Kälteleistung der erfindungsgemäßen Klimaanlage wird eine Steuerung der vom Koppelwärmetauscher 46 abgegebenen Kälte- bzw. Heizleistung durch eine Steuerung des Kühlwassermassenstroms 48 des Kühlwasser-Heizkreislaufs ermöglicht. Eine Erhöhung dieser vom Koppelwärmetauscher 46 abgegebenen Leistung durch eine Steuerung bzw. Regelung des Kühlwassermassenstroms 48 führt zu einer Erniedrigung des Verdampfungsdrucks der Klimaanlage und umgekehrt. Die oben beschriebene Heizfunktion erlaubt auch im Heizbetrieb in vorteilhafter Weise eine Entfeuchtung der aufzuheizenden Luft. Damit kann die Innenluft 52 (siehe Figur 3) entfeuchtet und anschließend aufgeheizt werden. In vorteilhafter Weise wird dadurch erreicht, dass nur ein kleiner Anteil von kalter Außenluft 40 dem Klimakasten 36 des Fahrzeuges zugeführt werden muss. Auf diese Art ist ein energieeffizienteres und schnelleres Aufheizen des Fahrzeuginnenraums möglich, als im bisherigen Außenluftbetrieb. Mit der erfindungsgemäßen Klimaanlage ist somit ein effektiver Umluftbetrieb möglich.

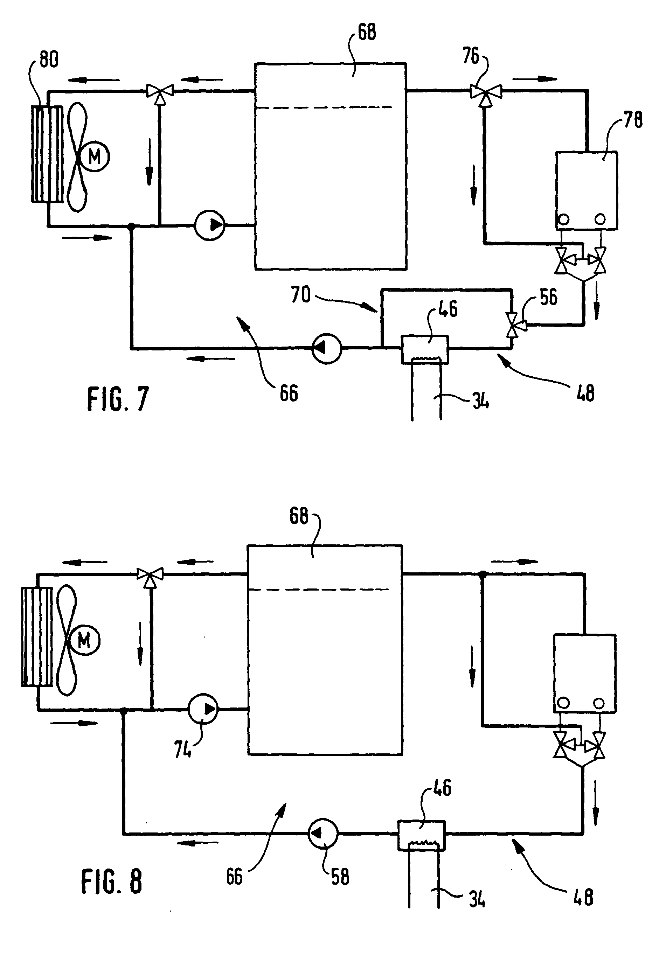

In der erfindungsgemäßen Klimaanlage ist der Koppelwärmetauscher 46 in den Kühlwasserkreislauf 66 einer Wärmequelle, insbesondere eines Verbrennungsmotors 68 eines Kraftfahrzeuges, integriert. (Siehe Figur 7 bis 9) Um den Kühlwassermassenstrom 48 durch den Koppelwärmetauscher 46 in erfindungsgemäßer Weise zu steuern, kommen eine Reihe von Möglichkeiten in Betracht, von denen im Folgenden drei Beispiele exemplarisch aufgezeigt werden sollen.

Figur 7 zeigt ein erstes Ausführungsbeispiel der Einbindung des Koppelwärmetauschers 46 in den Kühlwasser-/Heizkreislauf 66 eines Kraftfahrzeugs. Der Kühlwasser-/Heizkreislauf 66 des Kraftfahrzeuges ist in an sich bekannter Weise ausgestaltet und soll daher, so weit für den Erfindungsgedanken nicht wesentlich, auch nicht weiter ausgeführt werden.

Das Ausführungsbeispiel gemäß Figur 7 offenbart die Verwendung einer Bypassleitung 70 zur Regelung des Kühlwassermassenstroms 48 durch den Koppelwärmetauscher 46. Mit Hilfe des Bypassventils 56 kann der Kühlwassermassenstrom 48 durch den Koppelwärmetauscher 46 variiert werden, so dass die Einstellung der vom Koppelwärmetauschern 46 in den Kühlmittelkreislauf 66 abgegebenen Leistung regelbar ist. So führt beispielsweise eine Erhöhung der vom Koppelwärmetauscher 46 abgegebenen Leistung zu einer Erniedrigung des Verdampfungsdruck im Kältemittelkreislauf 34 der erfindungsgemäßen Klimaanlage.

Das Ausführungsbeispiel der Figur 8 zur Steuerung des Kühlwassermassenstromes 48 durch den Koppelwärmetauscher 46 offenbart die Verwendung einer elektrisch angesteuerten Kühlwasserpumpe 58 zur Steuerung des Kühlwassermassenstromes 48. Der Kühlwassermassenstrom 48 durch den Koppelwärmetauscher 46 kann durch die Ansteuerung einer elektrischen Zusatzwasserpumpe 58 bzw. optional auch durch die Ansteuerung einer elektrischen Hauptwasserpumpe 74 geregelt werden.

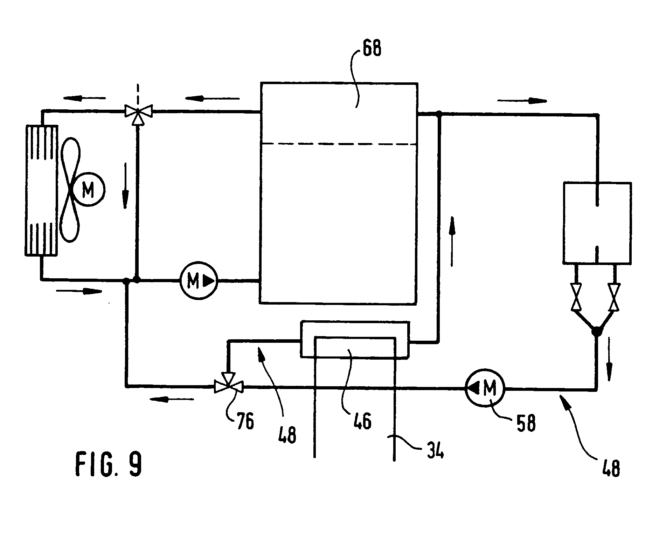

Figur 9 zeigt ein weiteres Ausführungsbeispiel für die Einbindung des Koppelwärmetauschers 46, in den Kühlwasser-/Heizkreislauf 66 des Verbrennungsmotors 68 eines Kraftfahrzeuges. In diesem Fall wird die Steuerung des Kühlwassermassenstroms durch den Koppelwärmetauscher 46 durch die Ansteuerung eines Mischventils 76 realisiert. Der Koppelwärmetauscher 46 ist in diesem Ausführungsbeispiel parallel zum Verbrennungsmotor 68 in den Kühlwasser- bzw. Heizkreislauf 66 des Kraftfahrzeuges angeordnet.

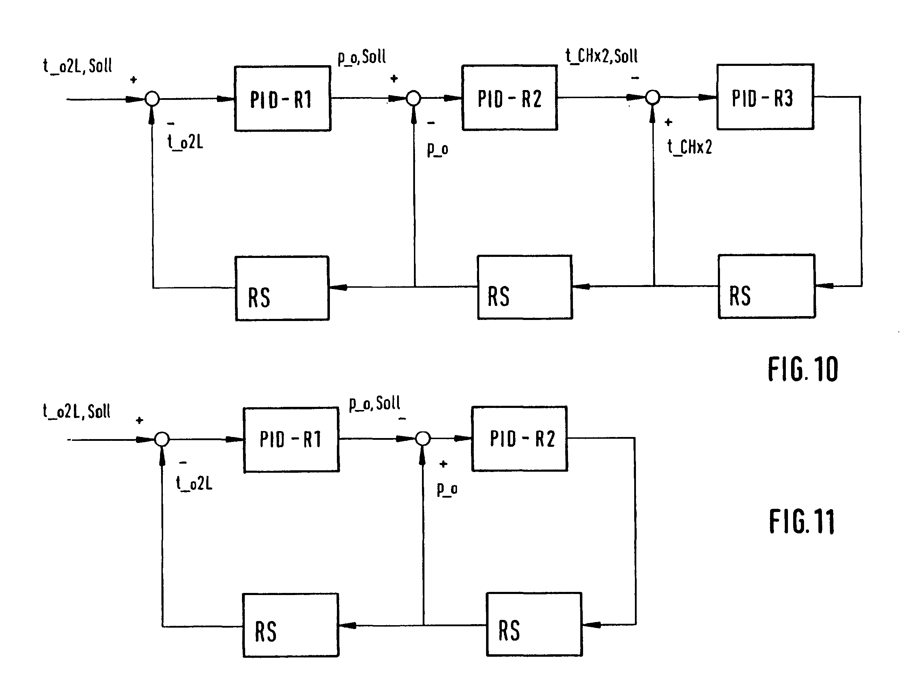

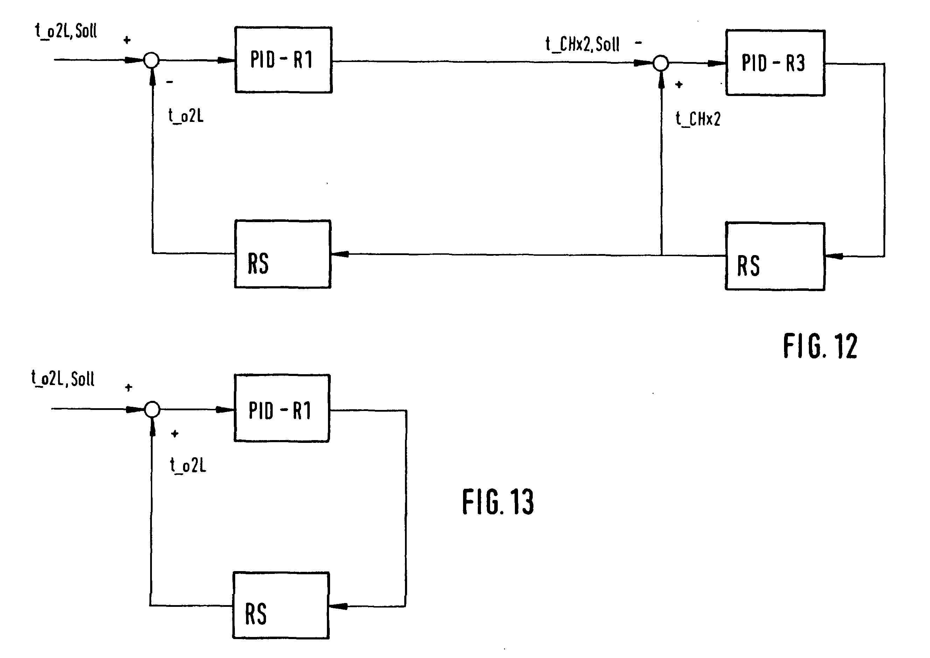

Im Folgenden soll eine Beschreibung von möglichen Regelstrategien bzw. Verfahren zum Betrieb der erfindungsgemäßen Klimaanlage mit Heizfunktion zur Realisierung einer hohen Heizleistung erfolgen. In den Figuren 11 bis 14 sind vier beispielhafte Varianten für eine solche Regelstrategie bzw. für die einer solchen Regelstrategie zu Grunde liegenden Regelkreisen aufgezeigt. Die Varianten ergeben sich durch verschiedene Kombinationen einzelner Regler 1 bis 3. (PID-Ri)

Dabei bezeichnet:

| | |
|---|---|
| $t\_U$: | Umgebungstemperatur |
| $t\_I$: | Innentemperatur der Fahrzeugkabine |
| $X$: | Anteil der Umluft an der gesamten zugeführten Luft |
| $t\_02L$ | Lufttemperatur am Verdampferaustritt |
| $p\_0$ | Verdampferdruck |
| $t\_CHx2$ | $CO_2$ Temperatur am Koppelwärmeübetrager Austritt |

Der Sollwert der Lufttemperatur am Verdampferaustritt wird beispielsweise errechnet gemäß:

$$t\_02L_{Soll} \ (X^* \ t\_U + (1-X)^* \ t\_I) \text{-}5K$$

Entsprechend einer Vorschrift zur Optimierung der Aufheizleistung des Innenraumes, beispielsweise eines Kraftfahrzeuges, unter Berücksichtigung einer ausreichenden Befeuchtung der Luft im Klimakasten 36, wird die Solltemperatur der aus dem Verdampfer austretenden Luft 54 ($t\_02L_{soll}$) festgelegt. Damit wird der Verdampfungsdruck so eingestellt, dass die Verdampfungstemperatur ca. 0-20 K, vorzugsweise 5 K unter der Temperatur der eintretenden Luft liegt.

Es hat sich gezeigt, dass sich die Verdampferleistung und damit die Temperatur der aus dem Verdampfer 18 austretenden Luft sehr gut durch die Durchflussmenge des Kühlfluids 48 durch den Koppelwärmetauscher 46 steuern lässt. Die Durchflussmenge des Kühlmittelfluids 48 durch den Koppelwärmetauscher 46 kann durch eine entsprechende Ansteuerung ausgewählter Komponenten (beispielsweise Bypassventil 56 in Figur 7 oder Zusatzwasserpumpe 58 in Figur 9) geregelt werden. Eine solche, aktive Regelung ermöglicht es prinzipiell auch, die Verdampfungstemperatur im Verdampfer 18 so niedrig einzustellen, dass sich auf dem Verdampfer Frost bildet.

In den Figuren 10 bis 13 bezeichnet "PID-Ri" den i-ten Regler in PID Technik. Die einzelnen Regler können in vorteilhafter Weise PID-Regler mit I-Wert-Begrenzung sein. Die Verwendung anderer Regler ist aber selbstverständlich auch möglich. Die Bezeichnung "RS" kennzeichnet jeweils eine Regelstecke.

Mittels eines Reglers PID-R wird die durch einen Sensor 60 gemessene Luftaustrittstemperatur aus dem Verdampfer $t\_02L$ auf den Sollwert $t\_02L_{Soll}$ geregelt. Die aus dem Regler 1 (PID-R1) berechnete Stellgröße kann entweder direkt auf die Regelstrecke (RS), beispielsweise Bypassventil 56 in Figur 7 oder Zusatzwasserpumpe 58 in Figur 8 oder aber auch auf einen weiteren, nachgelagerten Regler 2 (PID-R2) bzw. einen weiteren Regler 3 (PID-R3) gegeben werden. Mit den Reglern 2 und 3 können Totzeiten im System, die zu Regelschwingungen führen würden, ausgeglichen und die Regelgüte somit erhöht werden.

Durch die Messung und Regelung des Verdampfungsdruckes p_0 über einen Sensor 62 mittels Regler 2 kann die Totzeit, die sich nach Änderungen im Verdampfer auf der $CO_2$-Seite einstellt, bis diese Änderungen auf der Luftseite der Klimaanlage messbar werden, ausgeglichen werden.

Der Regler 3 kann Totzeiten zwischen Änderungen der $CO_2$-Temperatur am Koppelwärmetauscher-Austritt t_CHx2 (Sensor 64) und deren Auswirkung auf die Lufttemperatur am Verdampferaustritt t_02L oder den Verdampfungsdruck p_0 ausgleichen. Mit diesem Regler 3 wird der vom Regler 1 oder Regler 2 berechnete Sollwert für die Temperatur am Koppelwärmetauscher-Austritt t_CHx$_{Soll}$ eingeregelt.

Neben den zuvor erläuterten, beispielhaften Regelstrategien können aber selbstverständlich auch andere Parameter der Klimaanlage und insbesondere andere Drücke des Kältemittelkreislaufs der erfindungsgemäßen Klimaanlage verwendet werden. So kann beispielsweise die Verdampferleistung und damit die Lufttemperatur am Verdampferaustritt t_02L weiterhin durch An- oder Abschalten des inneren Wärmetauschers 20 sowie durch Auf- bzw. Abregeln des Kompressors 12 beeinflusst werden.

Im sogenannten Klimabetrieb arbeitet die Klimaanlage 34 entsprechend der Anordnungen gemäß Figur 3, Figur 4 und Figur 5. In dieser Betriebsart strömt das Heizgas (Kältemittel) ebenfalls vom Kompressor 12 in den Koppelwärmetauscher 46, wo es Wärme an das Kühlmittelfluid 48 des zugeordneten Kühlkreislaufs abgeben kann. Dieses Kühlmittelfluid wird im Kühlwasser-Heizkreislauf über ein Heizungsregelventil 76 (siehe Figur 7) am Heizungswärmetauscher 78 vorbei dem Motor 68 oder einem Kühler 80 des Kühlwasser-Heizkreislaufs zugeführt.

Im Kühlbetrieb der Klimaanlage ist das Mischventil (3-Wege-Ventil) 50 so geschaltet, dass der Gaskühler 14 durchströmt wird. Der Gaskühler 14 kühlt das umlaufende Kältefluid unter Wärmeabgabe an die Umgebung ab. Nach weiterer Wärmeabgabe im inneren Wärmetauscher 20 und Expansion auf niedrigen Druck im Expansionsventil 16 gelangt das Kältefluid in den Verdampfer 18, wo es unter Wärmeaufnahme (Nutzkälteleistung) verdampft. Über den inneren Wärmetauscher 20 gelangt das Kältefluid anschließend wieder in den Kompressor 12.

Besonders vorteilhaft erweist sich der beschriebene Klimabetrieb der erfindungsgemäßen Klimaanlage auf Grund der inhärent möglichen Motorerwärmung in der Startphase. Zudem kann auch im weiteren Fahrbetrieb ein Teil der Wärme aus der Klimaanlage dem Kühlmittelfluid 48 des Kühlwasser-Heizkreislaufs 66 zugeführt werden. Damit wird der Gaskühler 14 weniger belastet, was zu einer Verringerung der Kältemittelaustrittstemperatur am Gaskühler 14 führt. Dies führt wiederum zu einem besseren Wirkungsgrad der erfindungsgemäßen Klimaanlage 34.

Bei hohen Kühlmittelfluidtemperaturen ermöglicht die Schaltung nach Figur 3 unter Umständen keine ausreichende Entfeuchtungsleistung mehr. Dies kann jedoch - auf Kosten einer reduzierten Heizleistung im Koppelwärmetauscher 46 - durch das Zuschalten des inneren Wärmetauschers 20 umgangen werden.

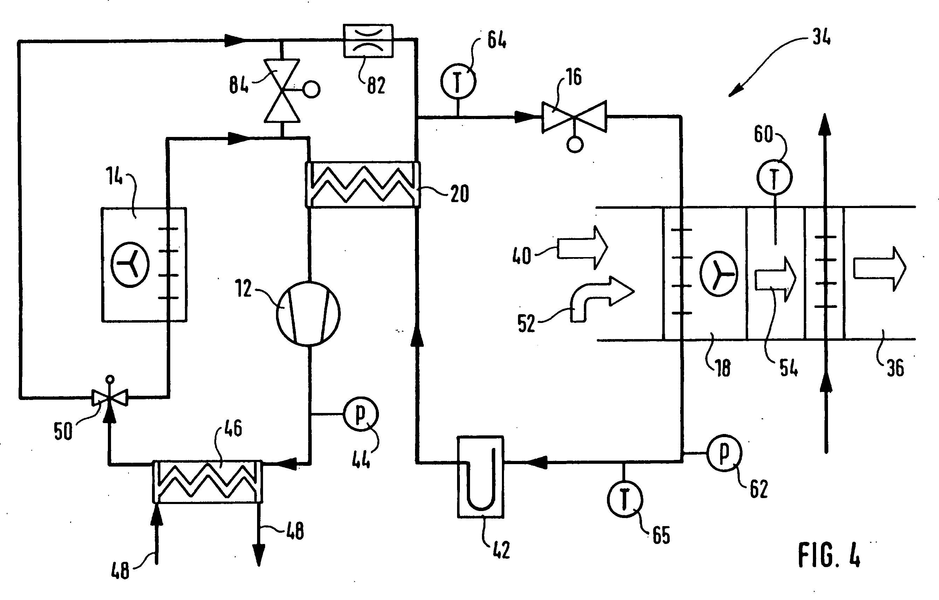

Figur 4 zeigt eine solche Schaltungsvariante mit den gegenüber der Klimaanlage gemäß Figur 3 vorhandenen Zusatzkomponenten Kapillare/Drossel 82 und 2-Wege-Schaltventil 84. Soll die Kälteleistung bei hohen Kühlmittelfluidtemperaturen erhöht werden, so wird das 2-Wege-Schaltventil 84, welches parallel zum inneren Wärmetauscher 20 angeordnet ist, geöffnet. Durch den Druckabfall über die seriell zum Schaltventil 84 angeordnete Kapillare/Drossel 82 strömt auch ein Teil des Kältemittels über den inneren Wärmetauscher 20 und gibt dabei Wärme an das Kältefluid auf der Niederdruckseite der Klimaanlage ab. Auf diese Weise kann eine größere Enthalpiedifferenz im Verdampfer 18 genutzt werden, was die Kälteleistung des Systems erhöht, allerdings gleichzeitig dessen Heizleistung erniedrigt.

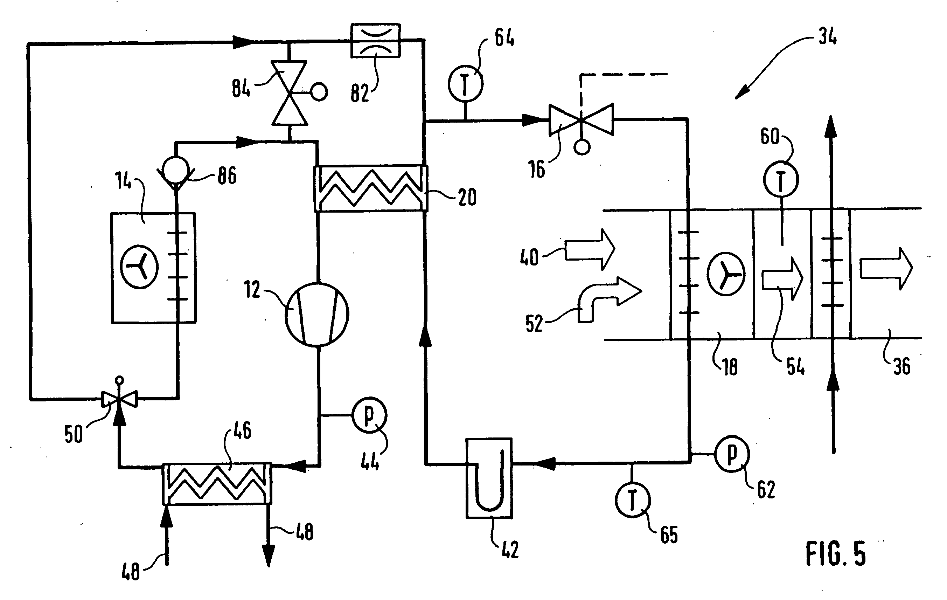

Bei jedem Start des Systems muss schnellstmöglich ein Hochdruck in den Komponenten zwischen Kompressor 12 und Expansionsventil 16 aufgebaut werden. Bei niedrigen Temperaturen wird dazu eine höhere Kältemittelmenge benötigt. Mit einer Anordnung gemäß Figur 5 kann die benötigte Kältemittelmenge nach dem Start des Klimaanlagenkreislaufs im Heizbetrieb reduziert werden. Dazu wird durch ein Rückschlagventil 86 der Gaskühler 14 komplett vom Rest der Klimaanlage getrennt. Auf diese Weise kann ein schnelleres Ansprechverhalten realisiert werden.

Eine weitere Möglichkeit, die Kälteleistung des Verdampfers 18 zu regeln, insbesondere eine Möglichkeit zur Feinregelung der Kälteleistung, kann mit einer Ansteuerung des Expansionsorgans 16 realisiert werden. Mit dem Expansionsventil 16 wird das Hochdruckniveau des Klimaanlagenkreislaufs geregelt, wobei eine Erhöhung des Hochdrucks zu einer Erniedrigung des Verdampfungsdruckes und somit zu einer Erhöhung der Kälteleistung führt. Jedoch wird zugleich bei dieser Art der Regelung die Kälteleistung des Systems beeinflusst. Eine solche Regelung kann daher eingesetzt werden, um Regelschwankungen des Systems, wie zuvor beschrieben, auszugleichen.

Die Komponenten Koppelwärmetauscher 46, 3-Wege-Ventil 50, innerer Wärmetauscher 20, Expansionsorgan 16, Kapillare/Drossel 82, 2-Wege-Schaltventil 84 sowie Rückschlagventil 86 können ganz oder teilweise zu einem kompakten Modul mit oder ohne zugehöriger Ansteuerelektronik zusammengefasst werden. Auf diese Weise ergibt sich eine erhebliche Einsparung von Kältemittelleitungen bzw. elektrischen Leitungen. Dies hat zudem den Vorteil, dass auch die Wärme- bzw. Kälteverluste ion diesen Leitungen reduziert werden. Insbesondere bei der Fertigung der Wärmetauscher 20 bzw. 46 in Mikrostruktur ergeben sich hier enorme Platz- und Gewichtsersparnisse, da die Anschlüsse dieser Komponenten zusammengefasst werden können. Solch ein kompaktes Modul für die Klimaanlage, beispielsweise eines Kraftfahrzeuges, kann auch bereits die Ansteuerelektronik für eine oder mehrer seiner Komponenten enthalten. Dies spart Bauraum und ermöglicht ein hochintegriertes System für eine Klimaanlage.

Durch eine Anordnung des Koppelwärmetauschers 46 in Strömungsrichtung des Kältemittelfluids hinter dem Gaskühler 14 und einem Umschaltventil (Heiz-/Kühlbetrieb) 50 vor dem Gaskühler wird der Koppelwärmetauscher 46 im Kühlbetrieb der Klimaanlage nicht durchströmt. Sind die für den Klimabetrieb beschriebenen Vorteile nicht erwünscht, kann durch den Wegfall des Koppelwärmetauschers 46 der Druckverlust im $CO_2$-Kreislauf verringert werden, was für den Kompressor 12 ein geringeres Druckverhältnis bedeutet, so dass sich damit der Wirkungsgrad der Klimaanlage als Kälteanlage erhöht.

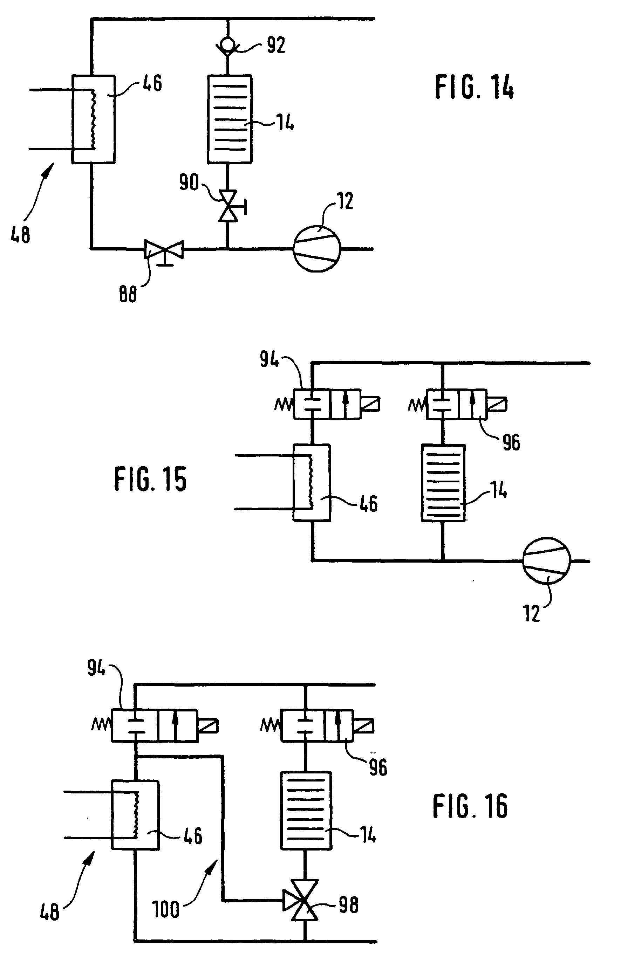

Weitere Varianten der Anordnung des Koppelwärmetauschers 46 und des Gaskühlers 14 ergeben sich aus den Figuren 14 bis 19 und der nachfolgenden Beschreibung dieser Figuren. Die in den Figuren 14 bis 19 dargestellten Ein-Wege-Ventile können in vorteilhafter Weise auch zu Zwei- oder Mehrwegventilen zusammengefasst werden. Auch sind die im Folgenden vorgestellten Ventilarten Hand- und Magnetventil lediglich Beispiele für mögliche Ventile. Des weiteren sind Kombinationen von Drosseln und Einwegeventilen ebenfalls möglich.

Figur 14 zeigt eine parallele Anordnung von Koppelwärmetauscher 46 und Gaskühler 14. Zwischen dem Verdichter 12 und dem Koppelwärmetauscher 46 einerseits und dem Verdichter 12 und Gaskühler 14 andererseits sind Handventile 88 bzw. 90 angeordnet. Der Koppelwärmetauscher 46 ist gegenüber dem Gaskühler 14 optional mittels eines Rückschlagventils 92 abgesichert. Durch Einstellung der Ventile 88 bzw. 90 kann wahlweise der Koppelwärmetauscher 46 oder der Gaskühler 14 vom Kältemittel durchströmt werden. Der Gaskühler 14 bleibt dabei einseitig zum Kältekreislauf offen und dient damit in vorteilhafter Weise als Speichervolumen. Das optionale Rückschlagventil 92 nach dem Gaskühler 14 ermöglicht es, die im Gaskühler gespeicherte Kältemittelmenge zu reduzieren. Selbstverständlich lassen sich die beiden Ventile 88 und 90 in ein 3-Wege-Mischventil integrieren.

Figur 15 zeigt eine alternative Ausgestaltung der parallelen Anordnung von Koppelwärmetauscher 46 und Gaskühler 14 aus Figur 14. In dieser Anordnung sind Ventile 94 bzw. 96 nach dem Koppelwärmetauscher 46 bzw. dem Gaskühler 14 angeordnet. In vorteilhafter Weise lassen sich in dieser Anordnung Magnetventile verwenden, da die Ventile in der Anordnung nach Figur 15 keinen kritischen Temperaturen über 100°C ausgesetzt sind. Selbstverständlich ist die Integration der beiden Ventile 94 und 96 in ein 3-Wege-Mischventil beispielsweise auch in ein Mischventil mit Stellantrieb möglich. Durch Einstellung der Ventile kann wahlweise der Koppelwärmetauscher 46 oder der Gaskühler 14 vom Kältemittel der Klimaanlage durchströmt werden. Der Gaskühler 14 bleibt dabei einseitig zum Kältekreislauf offen und dient damit ebenfalls, wie bereits in Zusammenhang mit Figur 14 beschrieben, als Speichervolumen.

Figur 16 zeigt eine weitere parallele Anordnung von Koppelwärmetauscher 46 und Gaskühler 14. Zusätzlich zu der Anordnung gemäß Figur 15 befindet sich ein weiteres Ventil 98 in der Zufuhrleitung zum Gaskühler 14, um diesen optional im Heizbetrieb der Klimaanlage beidseitig schließen zu können. Zwischen dem Gaskühlereintritt und dem Koppelwärmetauscher-Austritt ist ein Bypass 100 angeordnet, so dass Koppelwärmetauscher 46 und Gaskühler 14 auch in Reihe betrieben werden können. In vorteilhafter Weise ist daher das Ventil 98 als 3-Wege-Ventil ausgebildet. Im Ausführungsbeispiel gemäß Figur 16 hat man somit die Vorteile, Wärme an den Kühlfluidkreislauf abgeben zu können, wodurch sich eine höhere Kälteleistung zum einen und ein verkürzter Warmlauf des Verbrennungsmotor zum anderen ergibt.

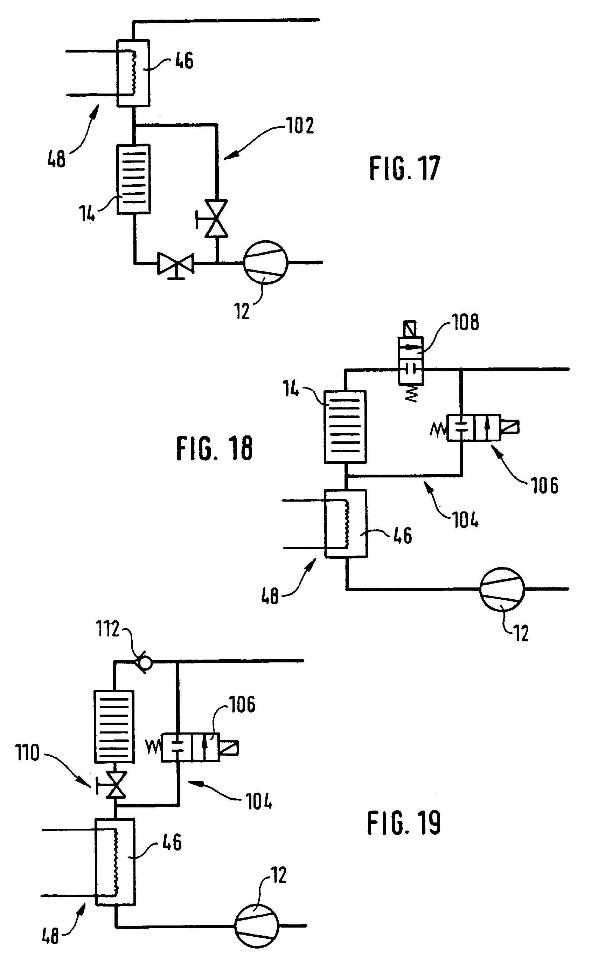

Figur 17 zeigt eine Reihenschaltung von Gaskühler 14 und Koppelwärmetauscher 46. In diesem Fall ist ein Bypass 102 um den Gaskühler 14 erforderlich, da ansonsten im Heizbetrieb Wärme an die Umgebung abgegeben wird. Auf Grund der hohen Temperaturbelastung können Magnetventile in dieser Anordnung nicht genutzt werden. Es empfiehlt sich der Einsatz von Handventilen oder andersartig ausgestalteten Ventilen. Auch in dieser Ausgestaltung lässt sich optional ein Rückschlagventil nach dem Gaskühler 14 anordnen, um die im Gaskühler gespeicherte Kältemittelmenge zu reduzieren.

Figur 18 zeigt eine weitere Variante der seriellen Anordnung von Koppelwärmetauscher 46 und Gaskühler 14. In dieser Variante ist ebenfalls ein Bypass 104 um den nachgeschalteten Gaskühler 14 notwendig. Andernfalls würde im Heizbetrieb das Kältemittel im Gaskühler 14 sehr weit abgekühlt werden, so dass diese Wärme im Verdampfer wieder abgegeben werden muss. Im Ausführungsbeispiel der Figur 18 werden zwei Magnetventile 106 bzw. 108 verwendet. Durch Einstellung der Ventile wird Kältemittel entweder durch den Gaskühler 14 oder durch den Bypass 104 am Gaskühler vorbeigeleitet. Da die Druckverluste über den Gaskühler 14 bzw. über die Ventile ähnliche Größenordnungen haben, sollten zwei Ventile verwendet werden, da bei Verwendung nur eines Ventils im Bypass die Möglichkeit besteht, dass bei geöffnetem Ventil Kältemittel durch den Gaskühler strömen kann. Prinzipiell ist jedoch auch eine Ausgestaltung mit lediglich einem Ventil möglich, indem beispielsweise der Druckverlust im Ventil verringert oder aber der Druckverlust im Gaskühler 14 künstlich, beispielsweise durch eine eingefügte Drossel, erhöht wird. In diesem Fall wäre die Anlage nur mit einem Ventil schaltbar. Optional ist ein 3-Wege-Ventil möglich, insbesondere ein 3-Wege-Ventil mit Stellantrieb.

Figur 19 zeigt eine zu Figur 18 alternative Ausführungsform unter Verwendung eines oder zweier Handventile. Im Wesentlichen gelten die zu Figur 18 gemachten Ausführungen. Optional lässt sich nach dem Gaskühler 14 ein Rückschlagventil 112 einführen, so dass durch ein Handventil 110 vor dem Gaskühler und dem Rückschlagventil 112 nach dem Gaskühler 14 das Puffervolumen des Gaskühlers aus dem Kältekreislauf der Klimaanlage herausnehmbar ist. In der Bypassleitung 104 lässt sich alternativer Weise auch ein weiteres Handventil für das Ventil 106 einsetzen.

Die erfindungsgemäße Klimaanlage sowie das erfindungsgemäße Verfahren zum Betreiben einer solchen Klimaanlage ist nicht auf die in den Zeichnungen und der Beschreibung dargestellten Ausführungsbeispiele beschränkt.

Insbesondere ist die Erfindung nicht beschränkt auf die Verwendung in einem Kraftfahrzeug mit einer Brennkraftmaschine.

Die Erfindung ist nicht beschränkt auf die Verwendung von $CO_2$ als Kältemittel oder Wasser als Kühlmittel.

**Patentansprüche**

1. Klimaanlage für ein Fahrzeug, insbesondere für ein von einer Brennkraftmaschine (68) angetriebenes Fahrzeug, mit zumindest einem Verdampfer (18), einem Verdichter (12), einem Kondensator beziehungsweise Gaskühler (14) und einem Expansionsventil (16), die in einem Kältemittelkreislauf (34) der Klimaanlage derart angeordnet sind, dass der Verdichter (12) im Kühlbetrieb der Klimaanlage ein Kältemittel über den Kondensator beziehungsweise Gaskühler (14) und das Expansionsventil (16), im Heizbetrieb jedoch unter Umgehung des Kondensators beziehungsweise Gaskühlers (14), zum Verdampfer (18) fördert, sowie mit einem Kühlmittelkreislauf einer Wärmequelle, wobei der Kältemittelkreislauf über einen Koppelwärmetauscher (46) an den Kühlmittelkreislauf (66) der Wärmequelle gekoppelt ist, und wobei im Kühlmittelkreislauf (66) Mittel (56,58,70,74,76), vorgesehen sind, die es gestatten, die Verdampferleistung des Verdampfers (18) der Klimaanlage durch die Wärmeabgabe über den Koppelwärmetauscher (46) in den Kühlmittelkreislauf (66) zu steuern und/oder zu regeln, **dadurch gekennzeichnet, dass** der Koppel-Wärmetauscher (46) in Strömungsrichtung des Kältemittels zwischen dem Verdichter (12) und dem Expansionsventil (16) angeordnet ist.

2. Klimaanlage nach Anspruch 1, **dadurch gekennzeichnet, dass** die Mittel (56, 58, 70, 74, 76) zur Steuerung beziehungsweise Regelung der Wärmeabgabe in den Kühlmittelkreislauf (66) einen Kühlmittelmassenstrom (48) durch den Koppelwärmetauscher (46) steuern beziehungsweise regeln.

3. Klimaanlage nach Anspruch 2, **dadurch gekennzeichnet, dass** die Mittel (56, 58, 70, 74, 76) mindestens eine Bypass-Leitung (70) um den Koppelwärmetauscher (46), insbesondere eine Bypass-Leitung (70) mit mindestens einem regelbaren Ventil (56), aufweisen.

4. Klimaanlage nach Anspruch 2 oder 3, **dadurch gekennzeichnet, dass** die Mittel (56, 58, 70, 74, 76) zur Steuerung des Kühlmittelmassenstroms (48) durch den Koppelwärmetauscher (46) mindestens ein Mischventil (56, 76) aufweisen.

5. Klimaanlage nach einem der Ansprüche 2 bis 4, **dadurch gekennzeichnet, dass** die Mittel (56, 58, 70, 74, 76) mindestens eine ansteuerbare Wasserpumpe (58, 74) aufweisen.

6. Klimaanlage nach einem der vorhergehenden Ansprüche, **dadurch gekennzeichnet, dass** der Koppelwärmetauscher (46) in Strömungsrichtung des Kältemittels vor dem Kondensator beziehungsweise Gaskühler (14) angeordnet ist und ein Heiz-Kühlbetrieb-Umschaltventil (50) vorzugsweise vor dem Kondensator beziehungsweise Gaskühler (14) angeordnet ist.

7. Klimaanlage nach einem der Ansprüche 1 bis 5, **dadurch gekennzeichnet, dass** der Koppel-Wärmetauscher in Strömungsrichtung des Kältemittels parallel zum Kondensator beziehungsweise Gaskühler (14) angeordnet ist.

8. Klimaanlage nach Anspruch 7, **dadurch gekennzeichnet, dass** ein Heiz-Kühlbetrieb-Umschaltventil (50) im Kältemittelkreis angeordnet ist, welches es vorzugsweise ermöglicht, dass entweder der Kondensator beziehungsweise Gaskühler (14) im Kühlbetrieb, oder der Koppelwärmetauscher (46) im Heizbetrieb durchströmt wird.

9. Klimaanlage nach Anspruch 8, **dadurch gekennzeichnet, dass** das Heiz-Kühlbetrieb-Umschaltventil (50) in Strömungsrichtung des Kältemittels vor dem Kondensator beziehungsweise Gaskühler (14) angeordnet ist.

10. Klimaanlage nach einem der vorhergehenden Ansprüche, **dadurch gekennzeichnet, dass** in Strömungsrichtung des Kältemittels hinter dem Kondensator beziehungsweise Gaskühler (14) ein innerer Wärmetauscher (20) angeordnet ist.

11. Klimaanlage nach Anspruch 10, **dadurch gekennzeichnet, dass** der Kältemittelkreis Mittel (82, 84) aufweist, die es ermöglichen, unter Umgehung des Kondensators beziehungsweise Gaskühlers (14) einen Kältemittelvolumenstrom durch den inneren Wärmetauscher (20) zu leiten.

12. Klimaanlage nach Anspruch 11, **dadurch gekennzeichnet, dass** die Mittel (82, 84) ein Ventil (84) und/oder eine Drossel (82) aufweisen.

13. Klimaanlage nach einem der vorhergehenden Ansprüche, **dadurch gekennzeichnet, dass** in Strömungsrichtung des Kältemittels hinter dem Kondensator beziehungsweise Gaskühler (14) ein Ventil (86), insbesondere ein Rückschlagventil (86), angeordnet ist.

14. Klimaanlage nach einem der vorhergehenden Ansprüche, **dadurch gekennzeichnet, dass** das mindestens eine Expansionsventil (16) des Kältemittelkreislaufs ein regelbares Expansionsventil ist.

15. Klimaanlage nach einem der vorhergehenden Ansprüche, **dadurch gekennzeichnet, dass** mindestens zwei Komponenten aus einer Gruppe von Komponenten, die zumindest den Koppelwärmetauscher (46), ein Bypass-Ventil (50) zur Umgehung des Kondensators beziehungsweise Gaskühlers (14), den inneren Wärmetauscher (20), das Expansionsventil (16), das Regelventil (16, 84), die Drossel (82), und das Rückschlagventil (86) umfasst, in einer baulichen Einheit angeordnet sind.

16. Klimaanlage nach Anspruch 15, **dadurch gekennzeichnet, dass** die bauliche Einheit zusammen mit einer Ansteuerungselektronik für die Komponenten der baulichen Einheit in einem kompakten Modul integriert ist.

17. Klimaanlage nach einem der vorhergehenden Ansprüche, **dadurch gekennzeichnet, dass** mindestens einer der Wärmetauscher (20, 46) nach dem Gegenstromprinzip arbeitet.

18. Klimaanlage nach einem der vorhergehenden Ansprüche, **dadurch gekennzeichnet, dass** mindestens einer der Wärmetauscher (20, 46) ein Mikrostruktur-Wärmetauscher ist.

19. Klimaanlage nach einem der vorhergehenden Ansprüche, **dadurch gekennzeichnet, dass** der Koppelwärmetauscher (46) im Kühlmittelkreislauf (66) eines Fahrzeuges in Strömungsrichtung nach einem Heizungswärmetauscher (78) angeordnet ist.

20. Klimaanlage nach einem der vorhergehenden Ansprüche, **dadurch gekennzeichnet, dass** der Koppelwärmetauscher (46) im Kühlmittelkreislauf (66) eines Fahrzeuges auf der Saugseite einer Kühlmittelpumpe (58, 74) angeordnet ist.

21. Klimaanlage nach einem der vorhergehenden Ansprüche, **dadurch gekennzeichnet, dass** der Koppel-Wärmetauscher (46) im Kühlmittelkreislauf (66) eines Fahrzeuges parallel zu einer Wärmequelle, insbesondere parallel zu einem Verbrennungsmotor (68) angeordnet ist.

22. Klimaanlage nach einem der vorhergehenden Ansprüche, **dadurch gekennzeichnet, dass** das Kältemittel ein solches Kältemittel ist, bei dem die Wärmeabgabe bei überkritischem Druck erfolgt.

23. Klimaanlage nach einem der vorhergehenden Ansprüche, **dadurch gekennzeichnet, dass** das Kältemittel Kohlendioxid ist.

24. Verfahren zum Betrieb einer Klimaanlage nach Anspruch 1, **dadurch gekennzeichnet, dass** zur Regelung des Kühlmittelmassenstroms (48) durch den Koppel-Wärmetauscher (46) eine Stellgröße genutzt wird, in die ein Temperatursignal (60) der Lufttemperatur nach dem Verdampfer (18) eingeht.

25. Verfahren zum Betrieb einer Klimaanlage nach Anspruch 24, **dadurch gekennzeichnet, dass** der Sollwert für die Lufttemperatur nach dem Verdampfer (18) so bestimmt wird, dass eine Entfeuchtung der dem Innenraum zugeführten Luft (54) stattfindet, die insbesondere so groß ist, dass im Umluftbetrieb der Klimaanlage kein Scheibenbeschlag im Fahrzeug auftritt.

26. Verfahren zum Betrieb einer Klimaanlage nach einem der vorhergehenden Ansprüche, **dadurch gekennzeichnet, dass** zur Regelung des Kühlmittelmassenstroms (48) durch den Koppelwärmetauscher (46) eine Stellgröße genutzt wird, in die der Druck (62) des Kältemittels, gemessen an einer Messstelle (62) zwischen dem Austritt aus dem Expansionsorgan (16) und dem Eintritt in den Verdichter (12), eingeht.

27. Verfahren zum Betrieb einer Klimaanlage nach einem der vorhergehenden Ansprüche, **dadurch gekennzeichnet, dass** zur Regelung des Kühlmittelmassenstroms (48) durch den Koppelwärmetauscher (46) eine Stellgröße genutzt wird, in die die Temperatur des Kältemittels vor (64) und/oder nach (65) dem Verdampfer (18) eingeht.

28. Verfahren zum Betrieb einer Klimaanlage nach einem der Ansprüche 24 bis 27, **dadurch gekennzeichnet, dass** zur Regelung des Kühlmittelmassenstroms (48) durch den Koppel-Wärmetauscher (46) eine Stellgröße genutzt wird, in die die Temperatur des Kältemittels nach dem Koppelwärmetauscher (46) eingeht.

29. Verfahren zum Betrieb einer Klimaanlage nach einem der vorhergehenden Ansprüche 24 bis 28, **dadurch gekennzeichnet, dass** die Verdampferleistung des Verdampfers (18) und damit auch die Lufttemperatur nach dem Verdampfer (18) zusätzlich durch Mittel gesteuert werden, die ein An- oder Abschalten des inneren Wärmetauschers (20) ermöglichen.

30. Verfahren zum Betrieb einer Klimaanlage nach einem der vorhergehenden Ansprüche 24 bis 29, **dadurch gekennzeichnet, dass** die Verdampferleistung des Verdampfers (18) und damit auch die Lufttemperatur nach dem Verdampfer zusätzlich durch eine Ansteuerung des Kompressors (12) geregelt wird.

31. Verfahren zum Betrieb einer Klimaanlage nach einem der vorhergehenden Ansprüche 24 bis 30, **dadurch gekennzeichnet, dass** die Regelung eine derartige Regelung ist, dass es möglich ist, die Verdampfungstemperatur im Verdampfer (18) so niedrig einzustellen, dass sich auf dem Verdampfer (18) Frost bildet.

**Claims**

1. Air-conditioning system for a vehicle, in particular for a vehicle driven by an internal combustion engine (68), with at least one evaporator (18) one compressor (12), one condenser or gas cooler (14) and one expansion valve (16) which are arranged in a refrigerant circuit (34) of the air-conditioning system in such a way that the compressor (12), in the cooling mode of the air-conditioning system, conveys a refrigerant to the evaporator (18) via the condenser or gas cooler (14) and the expansion valve (16), but, in the heating mode, conveys a refrigerant to the evaporator (18) by bypassing the condenser or gas cooler (14), and with a coolant circuit of a heat source, the refrigerant circuit being coupled via a coupling heat exchanger (46) to the coolant circuit (66) of the heat source, and means (56, 58, 70, 74, 76) being provided in the coolant circuit (66) which make it possible to control and/or regulate the evaporator power of the evaporator (18) of the air-conditioning system by the discharge of heat via the coupling heat exchanger (46) into the coolant circuit (66), **characterized in that** the coupling heat exchanger (46) is arranged between the compressor (12) and the expansion valve (16) in the direction of flow of the refrigerant.

2. Air-conditioning system according to Claim 1, **characterized in that** the means (56, 58, 70, 74, 76) for controlling or regulating the discharge of heat into the coolant circuit (66) control or regulate a coolant mass flow (48) through the coupling heat exchanger (46).

3. Air-conditioning system according to Claim 2, **characterized in that** the means (56, 58, 70, 74, 76) have at least one bypass line (70) around the coupling heat exchanger (46), in particular a bypass line (70) having at least one regulatable valve (56).

4. Air-conditioning system according to Claim 2 or 3, **characterized in that** the means (56, 58, 70, 74, 76) for controlling the coolant mass flow (48) through the coupling heat exchanger (46) have at least one mixing valve (56, 76).

5. Air-conditioning system according to one of Claims 2 to 4, **characterized in that** the means (56, 58, 70, 74, 76) have at least one activatable water pump (58, 74).

6. Air-conditioning system according to one of the preceding claims, **characterized in that** the coupling heat exchanger (46) is arranged upstream of the condenser or gas cooler (14) in the direction of flow of the refrigerant, and a heating/cooling-mode changeover valve (50) is arranged preferably upstream of the condenser or gas cooler (14).

7. Air-conditioning system according to one of Claims 1 to 5, **characterized in that** the coupling heat exchanger is arranged parallel to the condenser or gas cooler (14) in the direction of flow of the refrigerant.

8. Air-conditioning system according to Claim 7, **characterized in that** the refrigerant circuit has arranged in it a heating/cooling-mode changeover valve (50) which preferably makes it possible to have either a throughflow of the condenser or gas cooler (14) in the cooling mode or of the coupling heat exchanger (46) in the heating mode.

9. Air-conditioning system according to Claim 8, **characterized in that** the heating/cooling-mode changeover valve (50) is arranged upstream of the condenser or gas cooler (14) in the direction of flow of the refrigerant.

10. Air-conditioning system according to one of the preceding claims, **characterized in that** an internal heat exchanger (20) is arranged downstream of the condenser or gas cooler (14) in the direction of flow of the refrigerant.

11. Air-conditioning system according to Claim 10, **characterized in that** the refrigerant circuit has means (82, 84) which make it possible, by bypassing the condenser or gas cooler (14), to conduct a refrigerant volume flow through the internal heat exchanger (20).

**12.** Air-conditioning system according to Claim 11, **characterized in that** the means (82, 84) have a valve (84) and/or a throttle (82).

**13.** Air-conditioning system according to one of the preceding claims, **characterized in that** a valve (86), in particular a non-return valve (86), is arranged downstream of the condenser or gas cooler (14) in the direction of flow of the refrigerant.

**14.** Air-conditioning system according to one of the preceding claims, **characterized in that** the at least one expansion valve (16) of the refrigerant circuit is a regulatable expansion valve.

**15.** Air-conditioning system according to one of the preceding claims, **characterized in that** at least two components from a group of components which comprises at least the coupling heat exchanger (46), a bypass valve (50) for bypassing the condenser or gas cooler (14), the internal heat exchanger (20), the expansion valve (16), the regulating valve (16, 84), the throttle (82) and the non-return valve (86) are arranged in a structural unit.

**16.** Air-conditioning system according to Claim 15, **characterized in that** the structural unit is integrated, together with activation electronics for the components of the structural unit, in a compact module.

**17.** Air-conditioning system according to one of the preceding claims, **characterized in that** at least one of the heat exchangers (20, 46) operates on the countercurrent principle.

**18.** Air-conditioning system according to one of the preceding claims, **characterized in that** at least one of the heat exchangers (20, 46) is a microstructure heat exchanger.

**19.** Air-conditioning system according to one of the preceding claims, **characterized in that** the coupling heat exchanger (46) is arranged, in the coolant circuit (66) of a vehicle, downstream of a heating heat exchanger (78) in the direction of flow.

**20.** Air-conditioning system according to one of the preceding claims, **characterized in that** the coupling heat exchanger (46) is arranged, in the coolant circuit (66) of a vehicle, on the suction side of a coolant pump (58, 74).

**21.** Air-conditioning system according to one of the preceding claims, **characterized in that** the coupling heat exchanger (46) is arranged, in the coolant circuit (66) of a vehicle, parallel to a heat source, in particular parallel to an internal combustion engine (68).

**22.** Air-conditioning system according to one of the preceding claims, **characterized in that** the refrigerant is a refrigerant in which the discharge of heat takes place at a supercritical pressure.

**23.** Air-conditioning system according to one of the preceding claims, **characterized in that** the refrigerant is carbon dioxide.

**24.** Method for operating an air-conditioning system according to Claim 1, **characterized in that**, to regulate the coolant mass flow (48) through the coupling heat exchanger (46), a manipulated variable is used which includes a temperature signal (60) of the air temperature downstream of the evaporator (18).

**25.** Method for operating an air-conditioning system according to Claim 24, **characterized in that** the desired value for the air temperature downstream of the evaporator (18) is determined such that a dehumidification of the air (54) supplied to the interior takes place, which, in particular, is such that no windscreen fogging occurs in the vehicle when the air-conditioning system is in the circulating-air mode.

**26.** Method for operating an air-conditioning system according to one of the preceding claims, **characterized in that**, to regulate the coolant mass flow (48) through the coupling heat exchanger (46), a manipulated variable is used which includes the pressure (62) of the refrigerant, measured at a measurement point (62) between the outlet from the expansion member (16) and the inlet into the compressor (12).

**27.** Method for operating an air-conditioning system according to one of the preceding claims, **characterized in that**, to regulate the coolant mass flow (48) through the coupling heat exchanger (46), a manipulated variable is used which includes the temperature of the refrigerant upstream (64) and/or downstream (65) of the evaporator (18).

**28.** Method for operating an air-conditioning system according to one of Claims 24 to 27, **characterized in that**, to regulate the coolant mass flow (48) through the coupling heat exchanger (46), a manipulated variable is used which includes the temperature of the refrigerant downstream of the coupling heat exchanger (46).

**29.** Method for operating an air-conditioning system according to one of the preceding Claims 24 to 28, **characterized in that** the evaporator power of the evaporator (18) and therefore also the air temperature downstream of the evaporator (18) are additionally controlled by means which make it possible to switch the internal heat exchanger (20) on or off.

**30.** Method for operating an air-conditioning system according to one of the preceding Claims 24 to 29, **characterized in that** the evaporator power of the evaporator (18) and therefore also the air temperature downstream of the evaporator are additionally regulated by means of an activation of the compressor (12).

**31.** Method for operating an air-conditioning system according to one of the preceding Claims 24 to 30, **characterized in that** regulation is regulation such that it is possible to set the evaporation temperature in the evaporator (18) so low that frost is formed on the evaporator (18).

## Revendications

**1.** Installation de climatisation d'un véhicule notamment d'un véhicule entraîné par un moteur à combustion interne (68), comportant au moins un évaporateur (18), un compresseur (12), un condenseur ou radiateur à gaz (14) et une soupape d'expansion (16), ces éléments étant installés dans le circuit de l'agent de refroidissement (34) de l'installation de climatisation, et dans laquelle

le compresseur (12), lorsque l'installation de climatisation fonctionne en générateur de froid, fait circuler un agent de refroidissement à travers le condenseur ou radiateur à gaz (14) et la soupape d'expansion (16) alors qu'en mode de chauffage, en contournant le condenseur ou radiateur à gaz (14), il alimente l'évaporateur (18), ainsi qu'un circuit d'agent de refroidissement d'une source chaude, le circuit d'agent de refroidissement passant par un échangeur de chaleur de couplage (46) pour le circuit d'agent de refroidissement (66) de la source chaude, et

le circuit d'agent de refroidissement (66) comporte des moyens (56, 58, 70, 74, 76) permettant de commander et/ou de réguler la puissance d'évaporation de l'évaporateur (18) de l'installation de climatisation par l'apport de chaleur par l'échangeur de chaleur couplé (46) au circuit d'agent de refroidissement (66),

**caractérisée en ce que**

l'échangeur de chaleur de couplage (46) est installé entre le compresseur (12) et la soupape d'expansion (16) dans le sens de circulation de l'agent de refroidissement.

**2.** Installation de climatisation selon la revendication 1,
**caractérisée en ce que**
les moyens (56, 58, 70, 74, 76) de commande ou de régulation de l'apport de chaleur au circuit d'agent de refroidissement (66) règlent ou commandent le débit massique de l'agent de refroidissement (48) à travers l'échangeur de chaleur de couplage.

**3.** Installation de climatisation selon la revendication 2,
**caractérisée en ce que**
les moyens (56, 58, 70, 74, 76) comportent au moins une conduite de dérivation (70) autour de l'échangeur de chaleur de couplage, notamment une conduite de dérivation (70) avec au moins une vanne réglable (56)

**4.** Installation de climatisation selon la revendication 2 ou 3,
**caractérisée en ce que**
les moyens (56, 58, 70, 74, 76) de commande du débit massique d'agent de refroidissement (48) par l'échangeur de chaleur de couplage, ont au moins une vanne mélangeuse (56, 76).

**5.** Installation de climatisation selon l'une des revendications 2 à 4,
**caractérisée en ce que**
les moyens (56, 58, 70, 74, 76) comportent au moins une pompe à eau commandée (58, 74).

**6.** Installation de climatisation selon l'une des revendications précédentes,
**caractérisée en ce que**
l'échangeur de chaleur couplé (46) est installé en amont du condenseur ou radiateur à gaz (14) dans le sens de passage de l'agent de refroidissement et une vanne de commutation (50) chauffage/refroidissement, est installée de préférence en amont du condenseur ou radiateur à gaz (14).

**7.** Installation de climatisation selon l'une des revendications 1 à 6,
**caractérisée en ce que**
l'échangeur de chaleur couplé est installé en parallèle au condenseur ou radiateur à gaz (14) dans le sens de passage de l'agent de refroidissement.

**8.** Installation de climatisation selon la revendication 7,
**caractérisée en ce qu'**
une vanne de commutation chauffage/refroidissement (50) dans le circuit d'agent de refroidissement, permet de préférence le passage du fluide dans le condenseur ou radiateur de gaz (14) en mode de refroidissement, ou dans l'échangeur de chaleur de couplage (46) en mode de chauffage.

**9.** Installation de climatisation selon la revendication 8,
**caractérisée en ce que**
la vanne de commutation chaud/froid (50) est installée avant le condenseur ou radiateur à gaz (14) dans le sens de passage de l'agent de refroidissement.

**10.** Installation de climatisation selon l'une des revendications précédentes,
**caractérisée en ce qu'**
un échangeur de chaleur interne (20) est prévu en aval du condenseur ou radiateur à gaz (14) dans le sens de passage de l'agent de refroidissement.

**11.** Installation de climatisation selon la revendication 10,
**caractérisée en ce que**
le circuit d'agent de refroidissement comporte des moyens (82, 84) permettant de contourner le condenseur ou radiateur de gaz (14) et de fournir un débit volumique d'agent de refroidissement à travers l'échangeur de chaleur interne (20).

**12.** Installation de climatisation selon la revendication 11,
**caractérisée en ce que**
les moyens (82, 84) comportent une soupape (84) et/ou un organe d'étranglement (82).

**13.** Installation de climatisation selon l'une des revendications précédentes,
**caractérisée en ce qu'**
en aval du condensateur ou radiateur à gaz (14) dans le sens de passage du fluide, il est prévu une vanne (86), notamment un clapet anti-retour (86).

**14.** Installation de climatisation selon l'une des revendications précédentes,
**caractérisée en ce qu'**
au moins un détendeur (16) du circuit d'agent de refroidissement est une soupe d'expansion réglable.

**15.** Installation de climatisation selon l'une des revendications précédentes,
**caractérisée en ce qu'**
au moins deux composants d'un groupe de composants comprenant au moins l'échangeur de chaleur de couplage (46), une vanne de dérivation (50) pour contourner le condenseur ou radiateur à gaz (14), l'échangeur de chaleur interne (20), le détendeur (16), la soupape de régulation (16, 84), l'organe d'étranglement (82) et le clapet anti-retour (86) sont réunis en une unité de construction.

**16.** Installation de climatisation selon la revendication 15,
**caractérisée en ce que**
l'unité de construction avec une électronique de commande des composants de cette unité est intégrée sous la forme d'un module compact.

**17.** Installation de climatisation selon l'une des revendications précédentes,
**caractérisée en ce qu'**
au moins l'un des échangeurs de chaleur (20, 46) fonctionne selon le principe de l'échangeur à contre-courant.

**18.** Installation de climatisation selon l'une des revendications précédentes,
**caractérisée en ce qu'**
au moins l'un des échangeurs de chaleur (20, 46) est un échangeur de chaleur à microstructure.

**19.** Installation de climatisation selon l'une des revendications précédentes,
**caractérisée en ce que**
l'échangeur de chaleur de couplage (46) est installé dans le circuit d'agent de refroidissement (66) d'un véhicule, en aval de l'échangeur de chaleur de chauffage (78) selon le sens de l'écoulement.

**20.** Installation de climatisation selon l'une des revendications précédentes,
**caractérisée en ce que**
l'échangeur de chaleur de couplage (46) est installé dans le circuit d'agent de refroidissement (66) d'un véhicule sur le côté aspiration d'une pompe d'agent de refroidissement (58, 74) .

**21.** Installation de climatisation selon l'une des revendications précédentes,
**caractérisée en ce que**
l'échangeur de chaleur couplé (46) est installé dans le circuit d'agent de refroidissement (66) d'un véhicule, en parallèle à une source de chaleur, notamment en parallèle à un moteur à combustion interne (68).

**22.** Installation de climatisation selon l'une des revendications précédentes,
**caractérisée en ce que**
l'agent de refroidissement est un agent pour lequel l'échange de chaleur se fait à pression surcritique.

**23.** Installation de climatisation selon l'une des revendications précédentes,
**caractérisée en ce que**
l'agent de refroidissement est du dioxyde de carbone.

**24.** Procédé de gestion d'une installation de climatisation selon la revendication 1,
**caractérisé en ce que**
pour réguler le débit massique d'agent de refroidissement (48) à travers l'échangeur de chaleur de couplage (46), on utilise une grandeur de réglage dans laquelle intervient un signal de température (60) de la température d'air en aval de l'évaporateur (18).

**25.** Procédé de gestion d'une installation de climatisation selon la revendication 24,
**caractérisé en ce qu'**

on définit la valeur de consigne de la température d'air en aval de l'évaporateur (18) pour déshumidifier l'air (54) alimentant l'habitacle, cette déshumidification étant suffisante notamment pour éviter la buée sur les vitres du véhicule si l'installation de climatisation fonctionne en mode de circulation.

26. Procédé de gestion d'une installation de climatisation selon l'une des revendications précédentes, **caractérisé en ce que**

pour réguler le débit massique d'agent de refroidissement (48) à travers l'échangeur de chaleur de couplage (46), on utilise une grandeur de réglage faisant intervenir la pression (62) de l'agent de refroidissement mesurée à un point de mesure (62) compris entre la sortie de l'organe d'expansion (16) et l'entrée dans le compresseur (12).

27. Procédé de gestion d'une installation de climatisation selon l'une des revendications précédentes, **caractérisé en ce que**

pour réguler le débit massique d'agent de refroidissement (48) à travers l'échangeur de chaleur couplé (46), on utilise une grandeur de réglage dans laquelle intervient la température de l'agent de refroidissement en amont (64) et/ou en aval (65) de l'évaporateur (18).

28. Procédé de gestion d'une installation de climatisation selon l'une des revendications 24 à 27, **caractérisé en ce que**

pour réguler le débit massique d'agent de refroidissement (48) à travers l'échangeur de chaleur couplé (46), on utilise une grandeur de réglage faisant intervenir la température de l'agent de refroidissement en aval de l'échangeur de chaleur de couplage (46).

29. Procédé de gestion d'une installation de climatisation selon l'une des revendications 24 à 28, **caractérisé en ce que**

la puissance d'évaporation de l'évaporateur (18) et aussi la température de l'air en aval de l'évaporateur (18) sont en outre commandées par des moyens permettant l'arrêt ou la coupure de l'échangeur de chaleur interne (20).

30. Procédé de gestion d'une installation de climatisation selon l'une des revendications 24 à 29, **caractérisé en ce que**

la puissance d'évaporation de l'évaporateur (18) et aussi la température de l'air en aval de l'évaporateur sont régulées en plus par une commande du compresseur (12).

31. Procédé de gestion d'une installation de climatisation selon l'une des revendications 24 à 30, **caractérisé en ce que**

la régulation est réalisée pour permettre de régler la température d'évaporation dans l'évaporateur (18) à un niveau suffisamment faible pour que du givre se développe sur l'évaporateur (18).

FIG.1

FIG. 2

FIG. 3

EP 1 472 106 B1

FIG. 4

EP 1 472 106 B1

FIG. 5

FIG.6

Enthalpy [kJ/kg]

Pressure [Bar]

EP 1 472 106 B1

23

FIG. 7

FIG. 8

FIG. 9

**FIG. 10**

t_o2L,Soll → + / − (t_o2L) → PID − R1 → + / − p_o,Soll → − p_o → PID − R2 → + / − t_CHx2,Soll → t_CHx2 → PID − R3 → RS → RS → RS

**FIG. 11**

t_o2L,Soll → + / − (t_o2L) → PID − R1 → − / p_o,Soll → + p_o → PID − R2 → RS → RS

FIG. 12

FIG. 13

EP 1 472 106 B1

FIG. 14

FIG. 15

FIG. 16

FIG. 17

FIG. 18

FIG. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19806654 A
- DE 19806654 A1
- EP 0945291 A1
- DE 19818649 A1
- EP 0888912 A2
- EP 1266779 A2
- EP 1266799 A2